# EUROPEAN PATENT APPLICATION

(11) **EP 4 086 029 A1**
(43) Date of publication of application: **09.11.2022**
(21) Application number: 22167916.0
(22) Date of filing: 12.04.2022
(51) Int. Cl.: B23K 20/00, B23K 20/10, B23K 20/12, B23K 26/21, B23K 31/00, B23K 31/12, B23K 101/38

(54) **USING ANALYTICS AND ALGORITHMS TO PREDICT WELD QUALITY**

(30) Priority: 12.04.2021 IN 202121017108; 22.07.2021 US 202163224648 P; 24.01.2022 US 202217582110
(71) Applicant: Branson Ultrasonics Corporation, Brookfield, CT 06804 (US)
(72) Inventor: KURPIEWSKI, John Paul, Brookfield, 06804 (US); LIU, Rui, Brookfield, 06804 (US); CALDWELL, Scott, Brookfield, 06804 (US); MADKAIKAR, Ashish, Brookfield, 06804 (US); LI, Ruirong, Brookfield, 06804 (US)
(74) Representative: J A Kemp LLP

(57) **Abstract**

System and methods for using analytics and algorithms to predict weld quality are provided and include a computer having a processor and memory configured to receive weld parameter data generated during a welding process by a welder to join at least two parts with a weld, input the received weld parameter data to a data analytics model to generate at least one predicted weld quality parameter, compare the predicted weld quality parameter with a weld quality parameter threshold, and generate output indicating at least one of: the at least one predicted weld quality parameter and a result of the comparison between the at least one predicted weld quality parameter and the weld quality parameter threshold

## Description

### CROSS-REFERENCE TO RELATED APPLICATIONS

This application claims the benefit of U.S. Provisional Application 63/224,648, filed on July 22, 2021. This application also claims the benefit and priority of Indian provisional patent application 20212107108, filed April 12, 2021. The entire disclosures of each of the above applications are incorporated herein by reference.

### FIELD

The present disclosure relates to systems and methods using analytics to predict weld quality and, more specifically, to systems and methods using machine learning, including regression, classification, and/or artificial intelligence models and algorithms, to evaluate and predict the quality of welds.

### BACKGROUND

This section provides background information related to the present disclosure which is not necessarily prior art.

Welding devices are used to weld two or more work pieces or parts together. Metal work pieces can be welded together, for example, using an ultrasonic metal welder. Plastic work pieces can be welded together, for example, using an ultrasonic plastic welder, a laser welder, a vibration/friction welder, an infrared welder, a spin welder, a hot plate welder, and/or by using vibration welding with an infrared (IR) preheat, also referred to as clean vibration technology, hot gas welding, radiofrequency welding, or thermal staking.

Traditionally, to determine weld quality, a number of work pieces are sampled and tested from a group of welded work pieces at a predetermined sample rate, which could be up to 100% of the welded work pieces. Some types of testing, such as peel strength testing and pull (tensile) strength testing, traditionally utilize a testing procedure that is destructive to the tested parts, resulting in good parts being destroyed during the test process. Depending on the volume of parts being welded and the sample rate, the costs due to destructive testing can be substantial. For example, if a factory runs at a production volume of 30,000 welded pieces per day per production line, and a test sample rate of 1 destructive test per every 1,000 pieces, then 30 pieces per day would be destroyed per production line per day. If the cost of each piece is $30, then the cost due to the destroyed parts would be $900 per production line per day. If the factory includes 8 production lines, then the cost per day due to destroyed parts would be $7,200, and the resulting annual cost due to the parts destroyed during destructive testing would be $2.6 million. As this example shows, the costs due to destructive testing can be significant.

### SUMMARY

This section provides a general summary of the disclosure and is not a comprehensive disclosure of its full scope or all of its features.

A system is provided and includes a computer having a processor and memory configured to receive weld parameter data generated during a welding process by a welder to join at least two parts with a weld, input the received weld parameter data to a data analytics model to generate at least one predicted weld quality parameter, compare the predicted weld quality parameter with a weld quality parameter threshold, generate output indicating at least one of: the at least one predicted weld quality parameter and a result of the comparison between the at least one predicted weld quality parameter and the weld quality parameter threshold.

Optionally, the data analytics model is trained during a training procedure based on actual weld data that associates weld parameter data with weld quality data.

Optionally, the data analytics model is based on at least one of a supervised learning algorithm, an unsupervised learning algorithm, a regression algorithm, a classification algorithm, an artificial intelligence neural network algorithm, a decision tree algorithm, a random forest algorithm, a K nearest neighbor algorithm, a Naive Bayes algorithm, a support vector machine algorithm, and a gradient boosting regression algorithm.

Optionally, the at least one predicted weld quality parameter represents at least one of a peel strength, a pull/tensile strength, a burst pressure, and an optical appearance of the weld.

Optionally, the weld parameter data generated during the welding process includes data generated by an ultrasonic power supply of the welder corresponding to electrical energy supplied by the ultrasonic power supply of the welder to an ultrasonic converter of the welder, including at least one of electrical current data, voltage data, power data, and frequency data.

Optionally, the weld parameter data generated during the welding process includes data generated by an actuator that moves a horn of the welder, including at least one of a distance/depth of movement, a force of the horn, and a velocity/down speed of the horn.

Optionally, the weld parameter data generated during the welding process includes data generated by at least one sensor, the at least one sensor including at least one of a temperature sensor, a laser vibrometer, a position measurement sensor, a stress/strain sensor, an impact sensor, and a camera.

Optionally, the weld parameter data includes weld graph data having a series weld parameter values over a time period of the welding process.

Optionally, the processor and memory are further configured to analyze the weld graph data using matrix profiling to identify anomalies within the weld graph data.

Optionally, the at least two parts includes a bundle of wires.

Optionally, the welder is one of an ultrasonic welder, a laser welder, a vibration/friction welder, an infrared welder, a combined vibration welder with an infrared preheat system, a spin welder, and a hot plate welder.

Optionally, the data analytics model is configured to be recalibrated after the welder has been operated in the field by utilizing a tuning procedure based on actual weld data that associates weld parameter data with weld quality data.

A method is also provided and includes receiving, with a computer having a processor and memory, weld parameter data generated during a welding process by a welder to join at least two parts with a weld, inputting, with the computer, the received weld parameter data to a data analytics model to generate at least one predicted weld quality parameter, comparing, with the computer, the at least one predicted weld quality parameter with a weld quality parameter threshold, and generating, with the computer, output indicating at least one of the at least one predicted weld quality parameter and a result of the comparison between the at least one predicted weld quality parameter and the weld quality parameter threshold.

The method optionally further comprises training the data analytics model during a training procedure based on actual weld data that associates weld parameter data with weld quality data.

Optionally, the data analytics model includes at least one of a supervised learning algorithm, an unsupervised learning algorithm, a regression algorithm, a classification algorithm, an artificial intelligence neural network algorithm, a decision tree algorithm, a random forest algorithm, a K nearest neighbor algorithm, a Naive Bayes algorithm, a support vector machine algorithm, and a gradient boosting regression algorithm.

Optionally, the at least one predicted weld quality parameter represents at least one of a peel strength, a pull/tensile strength, a burst pressure of the weld, and an optical appearance of the weld.

Optionally, the weld parameter data generated during the welding process includes data generated by an ultrasonic power supply of the welder corresponding to electrical energy supplied by the ultrasonic power supply of the welder to an ultrasonic converter of the welder, including at least one of electrical current data, voltage data, power data, and frequency data.

Optionally, the weld parameter data generated during the welding process includes data generated by an actuator that moves a horn of the welder, including at least one of a distance/depth of movement, a force of the horn, and a velocity/down speed of the horn.

Optionally, the weld parameter data generated during the welding process includes data generated by at least one sensor, the at least one sensor including at least one of a temperature sensor, a laser vibrometer, a position measurement sensor, a stress/strain sensor, an impact sensor, and a camera.

Optionally, the weld parameter data includes weld graph data having a series weld parameter values over a time period of the welding process.

The method optionally further comprises analyzing, with the computer, the weld graph data using matrix profiling to identify anomalies within the weld graph data.

Another system is provided and includes a computer having a processor and memory configured to receive weld parameter data generated during a welding process by a welder to join at least two parts with a weld, filter the weld parameter data by removing anomalies in the weld parameter data based on comparing the weld parameter data with at least one threshold, for any anomalies in the weld parameter data, generate output indicating that the weld parameter data was rejected, input the filtered weld parameter data to a data analytics model to generate at least one predicted weld quality parameter, compare the predicted weld quality parameter with a weld quality parameter threshold, and generate output indicating at least one of: the at least one predicted weld quality parameter and a result of the comparison between the at least one predicted weld quality parameter and the weld quality parameter threshold.

Optionally, removing anomalies in the weld parameter data based on comparing the weld parameter data with at least one threshold includes utilizing a statistical process control algorithm.

Optionally, the statistical process control algorithm compares at least one data value of the weld parameter data with a mean value corresponding to the at least one data value and classifies the at least one data value as an anomaly in response to the at least one data value being more than a predetermined number of standard deviations away from the mean value.

Optionally, removing anomalies in the weld parameter data based on comparing the weld parameter data with at least one threshold includes comparing the weld parameter data with a high threshold and a low threshold and classifying the weld parameter data as an anomaly in response to the weld parameter data being greater than the high threshold or lower than the low threshold.

Optionally, the high threshold and the low threshold are user definable.

Optionally, the data analytics model is based on at least one of a supervised learning algorithm, an unsupervised learning algorithm, a regression algorithm, a classification algorithm, an artificial intelligence neural network algorithm, a decision tree algorithm, a random forest algorithm, a K nearest neighbor algorithm, a Naive Bayes algorithm, a support vector machine algorithm, and a gradient boosting regression algorithm.

Another system is provided and includes a computer having a processor and memory configured to receive weld parameter data generated during a welding process by a welder to join at least two parts with a weld, filter the weld parameter data by removing first anomalies in the weld parameter data based on comparing the weld parameter data with a high threshold and a low threshold, filter the weld parameter data by removing second anomalies in the weld parameter data based on a statistical process control algorithm, for the first and second anomalies in the weld parameter data, generate output indicating that the weld parameter data was rejected, input the filtered weld parameter data to at least one data analytics model to generate at least one predicted weld quality parameter, compare the predicted weld quality parameter with a weld quality parameter threshold, and generate output indicating at least one of: the at least one predicted weld quality parameter and a result of the comparison between the at least one predicted weld quality parameter and the weld quality parameter threshold.

Optionally, the statistical process control algorithm compares at least one data value of the weld parameter data with a mean value corresponding to the at least one data value and classifies the at least one data value as an anomaly in response to the at least one data value being more than a predetermined number of standard deviations away from the mean value.

Optionally, the at least one data analytics model includes at least one of a supervised learning algorithm, an unsupervised learning algorithm, a regression algorithm, a classification algorithm, an artificial intelligence neural network algorithm, a decision tree algorithm, a random forest algorithm, a K nearest neighbor algorithm, a Naive Bayes algorithm, a support vector machine algorithm, and a gradient boosting regression algorithm.

Optionally, the at least one data analytics model includes at least two of: a supervised learning algorithm; an unsupervised learning algorithm; a regression algorithm; a classification algorithm; an artificial intelligence neural network algorithm; a decision tree algorithm; a random forest algorithm; a K nearest neighbor algorithm; a Naive Bayes algorithm; a support vector machine algorithm; and a gradient boosting regression algorithm.

Optionally, the at least one data analytics model includes an artificial intelligence neural network algorithm and at least one of a regression algorithm, a classification algorithm, a decision tree algorithm, a random forest algorithm, a K nearest neighbor algorithm, a Naive Bayes algorithm, a support vector machine algorithm, and a gradient boosting regression algorithm.

Another system is provided and includes a computer having a processor and memory configured to: receive weld parameter training data that includes weld parameters and weld quality data associated with the weld parameters; input the received weld parameter training data to a plurality of data analytics models to generate a plurality of corresponding predicted weld quality parameters; compare each of the predicted weld quality parameters with the known weld quality data; select a particular data analytics model from the plurality of data analytics models based on the comparison; receive actual weld parameter data generated during a welding process by a welder to join at least two parts with a weld; input the actual weld parameter data to the particular data analytics model to generate at least one predicted weld quality parameter; compare the predicted weld quality parameter with a weld quality parameter threshold; and generate output indicating at least one of: the at least one predicted weld quality parameter and a result of the comparison between the at least one predicted weld quality parameter and the weld quality parameter threshold.

Optionally, each of the plurality of data analytics models is based on at least one of a supervised learning algorithm, an unsupervised learning algorithm, a regression algorithm, a classification algorithm, an artificial intelligence neural network algorithm, a decision tree algorithm, a random forest algorithm, a K nearest neighbor algorithm, a Naive Bayes algorithm, a support vector machine algorithm, and a gradient boosting regression algorithm.

Optionally, the at least one predicted weld quality parameter represents at least one of a peel strength, a pull/tensile strength, a burst pressure, and an optical appearance of the weld.

Another method is provided and includes: receiving, with a computer having a processor and memory, weld parameter training data that includes weld parameters and weld quality data associated with the weld parameters; inputting, with the computer, the received weld parameter training data to a plurality of data analytics models to generate a plurality of corresponding predicted weld quality parameters; comparing, with the computer, each of the predicted weld quality parameters with the known weld quality data; selecting, with the computer, a particular data analytics model from the plurality of data analytics models based on the comparison; receiving, with the computer, actual weld parameter data generated during a welding process by a welder to join at least two parts with a weld; inputting, with the computer, the actual weld parameter data to the particular data analytics model to generate at least one predicted weld quality parameter; comparing, with the computer, the predicted weld quality parameter with a weld quality parameter threshold; and generating, with the computer, output indicating at least one of: the at least one predicted weld quality parameter and a result of the comparison between the at least one predicted weld quality parameter and the weld quality parameter threshold.

Optionally, each of the plurality of data analytics models is based on at least one of a supervised learning algorithm, an unsupervised learning algorithm, a regression algorithm, a classification algorithm, an artificial intelligence neural network algorithm, a decision tree algorithm, a random forest algorithm, a K nearest neighbor algorithm, a Naive Bayes algorithm, a support vector machine algorithm, and a gradient boosting regression algorithm.

Optionally, the at least one predicted weld quality parameter represents at least one of a peel strength, a pull/tensile strength, a burst pressure, and an optical appearance of the weld.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
FIG. 1 is a block diagram of a welder and quality monitoring system in accordance with the present disclosure.
FIG. 2 is a block diagram of another welder and quality monitoring system in accordance with the present disclosure.
FIG. 3 is a block diagram of a quality monitoring computer/server in accordance with the present disclosure.
FIG. 4 is flow diagram of a quality monitoring method in accordance with the present disclosure.
FIG. 5 is a block diagram of a quality monitoring module in a training mode in accordance with the present disclosure.
FIG. 6 is a flow diagram of a training process for a quality monitoring system in accordance with the present disclosure.
FIG. 7 is a block diagram of a quality monitoring module in a quality monitoring mode in accordance with the present disclosure.
FIG. 8 is a flow diagram of a quality monitoring method in accordance with the present disclosure.
FIGs. 9A to 9C illustrate graphs of data from a case study of the present disclosure.
FIGs. 10A and 10B illustrate graphs of data from a case study of the present disclosure.
FIG. 11 illustrates graphs of data from a case study of the present disclosure.
FIG. 12 is a block diagram of a quality monitoring system using a regression and classification algorithm or model / AI neural network algorithms or models in accordance with the present disclosure.
FIG. 13 is a block diagram of a quality monitoring system using a statistical process control algorithm and a regression and classification algorithm or model / AI neural network algorithms or models in accordance with the present disclosure.
FIG. 14 is a block diagram of a quality monitoring system using upper and lower limits, a statistical process control algorithm, and a regression and classification algorithm or model / AI neural network algorithms or models in accordance with the present disclosure.
FIG. 15 is a flow chart showing common tasks that are automated with machine learning in accordance with the present disclosure.

Corresponding reference numerals indicate corresponding parts throughout the several views of the drawings.

### DETAILED DESCRIPTION

Example embodiments will now be described more fully with reference to the accompanying drawings.

The present disclosure provides systems and methods of using analytics to predict weld quality. For example, the present disclosure includes systems and methods that use data analytics and machine learning, including regression, classification, and/or artificial intelligence (Al) models and algorithms to evaluate and predict the quality of metal welds, plastic welds, and/or multi-material welds based on weld parameters that are monitored or sensed during the weld process. While the present disclosure provides welding examples, the present disclosure is equally applicable to other mechanical joining processes, such as thermal staking, riveting, and/or any other mechanical joining process whereby the quality of the joining process can be evaluated and predicted in accordance with the present disclosure. In this way, the systems and methods of the present disclosure can accurately and efficiently predict one or more metrics of weld quality of particular work pieces based on the monitored or sensed weld parameters using data analytics and machine learning and potentially reduce or eliminate destructive testing and scrapped production lots of the resulting welded work pieces. As such, the costs of destructive testing or scrapped lots can be mitigated or avoided by the use of the accurate and efficient testing procedures described herein.

The systems and methods of the present disclosure can utilize data analytics and machine learning algorithms or models categorized as supervised learning algorithms or models, such as regression and classification algorithms or models. Additionally or alternatively, the systems and methods of the present disclosure can utilize data analytics and machine learning algorithms or models categorized as unsupervised learning algorithms or models, such as Al neural network algorithms or models. For example, the data analytics and machine learning algorithms or models utilized by the system and methods of the present disclosure can include decision tree algorithms or models, random forest algorithms or models, K nearest neighbor (KNN) algorithms or models, Naive Bayes algorithms or models, support vector machine algorithms or models, and/or Al neural network algorithms or models, as discussed in further detail below.

The present disclosure includes quality monitoring systems and methods that monitor and receive data from the welder. For example, the monitored and received weld parameter data and/or graphs can include data with respect to electrical current, voltage, power, frequency, time, distance/depth, force, velocity, and/or other data parameters generated or used by the welder during the welding process. The weld graph data, for example, can include series data from the welding process, such as time vs. power, time vs. weld depth, and/or any other applicable data from the welding process mapped over time to create weld graph data. Additionally or alternatively, the quality monitoring system can receive weld parameter data from sensors that are external to the welding process, such as temperature data from temperature sensors, laser vibrometer position measurements, stress/strain data, image data of the resulting weld from a camera, vibration data from an impact sensor indicating the vibration of an ultrasonic stack, etc. The quality monitoring systems and methods receive the weld parameter data as input, process the weld parameter data using data analytics and machine learning, as discussed above and below, and generate an output indicating and/or corresponding to the quality of the resulting weld. For example, the quality monitoring systems and methods can process the various inputs and generate and output a predicted value indicating the quality of the weld strength, such as peel strength, pull/tensile strength, burst pressure, appearance, etc. The predicted value can then be compared to a predetermined threshold to determine whether the welded part has a sufficient weld strength/quality. Additionally or alternatively, the quality monitoring system can generate an output based on the comparison of the predicted value with the predetermined threshold to indicate whether the predicted weld quality metric or measurement is sufficient, based on whether the particular weld followed the expected process and/or achieved some measurement of quality characteristic above or below the predetermined threshold.

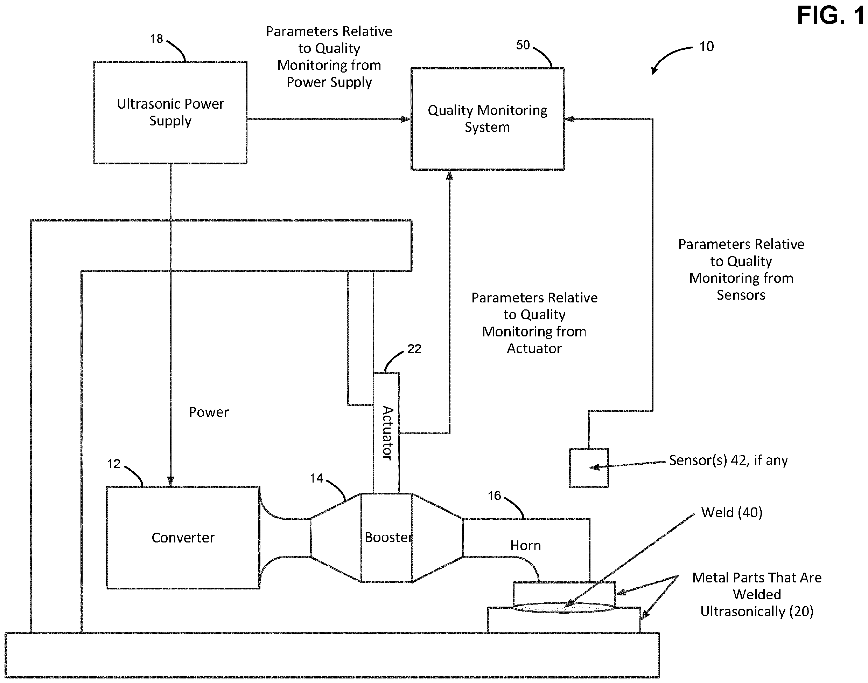

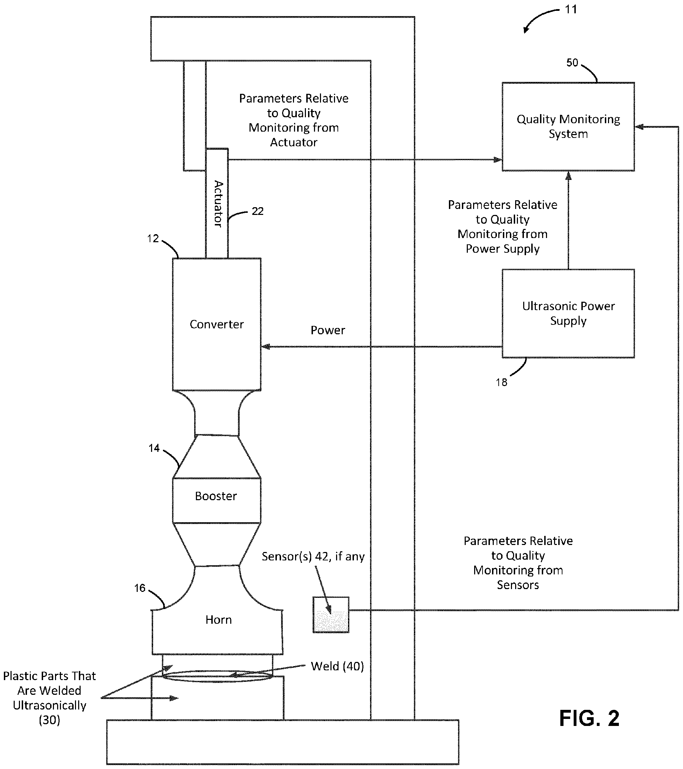

With reference to FIGs. 1 and 2, example ultrasonic welder systems 10, 11 that use data analytics and machine learning to predict weld quality in accordance with the present disclosure are shown. The ultrasonic welder system 10 shown in FIG. 1 is configured to weld at least two metal parts 20, while the ultrasonic welder system 11 shown in FIG. 2 is configured to weld at least two plastic parts 30. The at least two parts to be welded can include only two parts to be welded together, or more than two parts to be welded together, such as a bundle of wires, a stack of three or more parts, or any other suitable group of parts to be welded and joined together. The ultrasonic welder systems 10, 11 each include an ultrasonic power supply 18 that provides power to an ultrasonic converter 12, a booster 14, and an ultrasonic horn 16. As is commonly understood by those of skill in the art of ultrasonic welding, an ultrasonic horn 16 is a metal bar that transfers mechanical energy from the ultrasonic converter 12 and booster 14 to the work piece, i.e., the parts that are being welded together. The ultrasonic horn 16 is typically one-half wavelength long at the resonant frequency that is produced by the ultrasonic converter 12. Electrical energy from a power supply 18 at a frequency of 20-60 kHz, for example, is converted to mechanical energy by the ultrasonic converter 12. The mechanical energy converted in the ultrasonic converter 12 is transmitted to an application, such as the metal parts 20 (FIG. 1) or the plastic parts 30 (FIG. 2), that are to be welded together through the booster 14 and the ultrasonic horn 16. The booster 14 and the ultrasonic horn 16 perform the functions of transmitting the mechanical energy as well as transforming mechanical vibrations from the ultrasonic converter 12 by a gain factor. The ultrasonic welder systems 10, 11 are each controlled by a controller that has inputs and outputs coupled to the applicable components of ultrasonic welder systems 10, 11. For example, the power supply 18 can include the controller or the controller can be a separate device from the power supply 18. After the welding process, the parts 20, 30 are joined together by a weld 40

The mechanical vibration that results on a tip of the horn 16 is the motion that performs the task of welding the parts 20, 30 together. The horn tip can be made of titanium or another high strength, hard material. The parts 20, 30 to be welded together are placed adjacent to the horn tip, such as being placed together on an anvil. The horn tip is moved and brought into contact with a top part of the parts 20, 30 to be welded together by an actuator 22. The ultrasonic horn 16 oscillates in a manner to impart oscillations in the parts 20, 30 to be welded. That is, the ultrasonic horn 16 causes oscillatory compression/decompression of the parts 20, 30 with respect to each other causing surfaces of the parts 20, 30 abutting each other at a weld interface to be heated, eventually melting together and forming the weld 40.

While FIGs. 1 and 2 each depict ultrasonic welder systems 10, 11 as examples, the present disclosure is equally applicable to other types of welders and work piece processing devices. For example, in addition to ultrasonic welders, the systems and methods of using analytics to predict weld quality of the present disclosure are also applicable to laser welding systems, vibration/friction welding systems, infrared welding systems, combined vibration welding with infrared (IR) preheat systems (also referred to as Clean Vibration Technology), spin welding systems, and/or hot plate welding systems. In addition, while the examples of a metal welder and a plastic welder are discussed above with reference to FIGs. 1 and 2, the present disclosure is equally applicable to other welders, such as multi-material welders, and other mechanical joining processes. In addition, while the present disclosure provides welding examples, the present disclosure is equally applicable to other mechanical joining processes, such as thermal staking, riveting, and/or any other mechanical joining process whereby the quality of the joining process can be evaluated and predicted in accordance with the present disclosure. Additional details regarding ultrasonic welders and other work piece processing devices are included in Applicant's commonly assigned U.S. Patent No. 10,722,973, titled "Dynamic Adjustment of Weld Parameter of an Ultrasonic Welder," issued July 28, 2020, and Applicant's commonly assigned U.S. Patent No. 10,864,608, titled "Work Piece Processing Device with Servo-Elastic Actuator System with Compliance Elastic Member and Weight Compensation Elastic Member," issued December 15, 2020, which are both incorporated by reference in their entirety.

As shown in FIGs. 1 and 2, the ultrasonic welder systems 10, 11 each include a quality monitoring system 50. The quality monitoring system 50 receives various weld parameters related to quality monitoring. For example, the quality monitoring system 50 can receive weld parameters from the ultrasonic power supply 18 based on the electrical characteristics of the electrical energy provided by the power supply 18 to the ultrasonic converter, including, for example, data indicating the electrical current, voltage, power and/or frequency of the electrical energy provided. Additionally, the weld parameters can include data related to the amount of time electrical energy is provided by the power supply 18, such as a start time, a stop time, or a time duration of the electrical energy provided for the weld. Additionally or alternatively, the quality monitoring system 50 can also receive weld parameters from the actuator 22 based on characteristics of the movement of the horn 16 by the actuator 22 including, for example, data indicating a distance/depth of movement of the horn 16, a force of the horn 16 against the parts 20, 30, and/or a velocity or down speed of the horn 16. Additionally or alternatively, the weld parameters from the actuator 22 can also include data related to weld collapse and/or weld hold of the weld 40. Additionally or alternatively, the quality monitoring system 50 can also receive weld parameters from one or more sensors 42 included in the ultrasonic welders systems 10, 11. The sensors 42, for example, can include one or more temperature sensors, laser vibrometer, position measurement sensors, stress/strain sensors, an impact sensor and/or a camera. A temperature sensor can measure and provide temperature data to the quality monitoring system 50. A laser vibrometer can measure and provide vibration data of the ultrasonic stack, or vibration data of a vibration welder in a vibration welder embodiment. Position measurement sensors can provide position data of the horn 16 and/or of the parts 20, 30 being welded. Stress/strain sensors can provide stress/strain data of the parts 20, 30 being welded. An impact sensor can provide vibration data of the ultrasonic stack. A camera can provide images data of the parts 20, 30 being welded.

The quality monitoring system 50, the power supply 18, the actuator 22, and/or the sensors 42, if any, each include sufficient communication interfaces for communicating such data via wired or wireless communication connections with the quality monitoring system 50.

In some embodiments, the quality monitoring system 50 may include a quality monitoring computer located at the same location as the ultrasonic welder systems 10, 11. In such case, the ultrasonic power supply 18, the actuator 22, and/or the sensors 42, if any, can communicate the various weld parameters and data to the quality monitoring computer for processing, in accordance with the present disclosure, and the quality monitoring computer can be connected to an output device, such as a computer monitor and/or a display or touchscreen device to provide output to a user of the quality monitoring computer. In other embodiments, the quality monitoring computer can be integrated with the welder. For example, the quality monitoring computer can be embedded within the ultrasonic power supply 18 and connected to an output device for providing output to the user. In other embodiments, the quality monitoring system can be integrated with the end-user's manufacturing enterprise system (MES). In other embodiments, the quality monitoring system 50 may include a quality monitoring client computer located at the same location as the ultrasonic welder systems 10, 11 and a quality monitoring server computer located remotely at a different location from the ultrasonic welder systems 10, 11. In such case, the quality monitoring client computer can receive the various weld parameters and data from the ultrasonic power supply 18, the actuator 22, and/or the sensors 42, if any, and communicate the various weld parameters and data to the quality monitoring server for processing, in accordance with the present disclosure. For example, the quality monitoring computer may be implemented in a cloud environment, remote from the location or facility of the ultrasonic welder systems 10,11, such as in a cloud environment utilizing Microsoft Azure cloud services, Amazon Web Services, or Google cloud computing services. For further example, the quality monitoring computer/system can be implemented using the Plantweb^{™} digital ecosystem available from Emerson Electric Co.

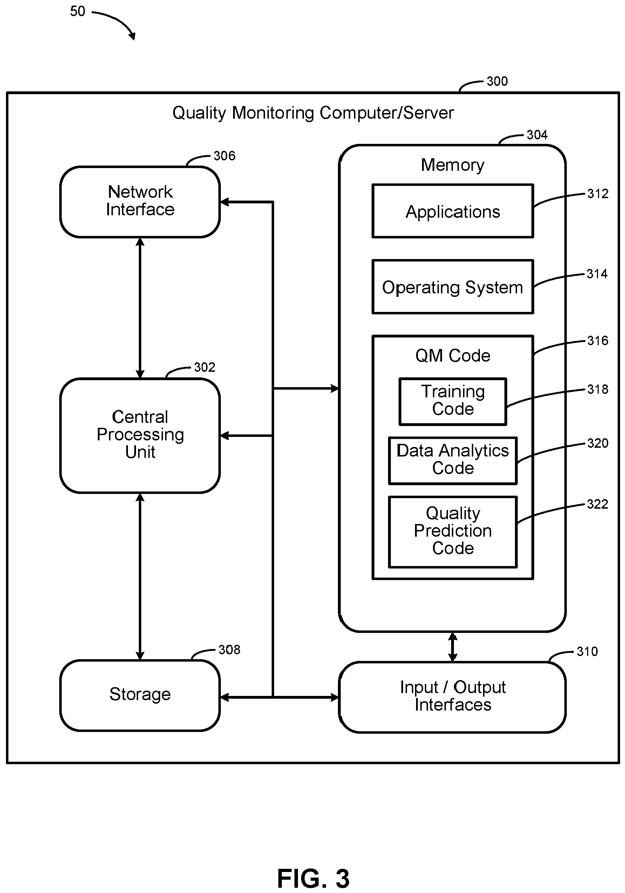

With reference to FIG. 3, a Quality Monitoring Computer/Server 300 of the quality monitoring system 50 is shown. As noted above, in some embodiments the Quality Monitoring Computer/Server 300 can function as a stand-alone computer and be located at the same location or facility as the ultrasonic welder systems 10, 11 and, in such case, directly receive the various weld parameters from the ultrasonic power supply 18, the actuator 22, and/or the sensors 42, if any. In other embodiments, the Quality Monitoring Computer/Server 300 can function as a server and be located remotely from the ultrasonic welder systems 10, 11, such as, for example, in a cloud environment or in a manufacturing enterprise system (MES). In such case, a Quality Monitoring client can receive the various weld parameters and data from the ultrasonic power supply 18, the actuator 22, and/or the sensors 42, if any, and communicate the various weld parameters and data to the quality monitoring computer/server 300 functioning as a server.

The quality monitoring computer/server 300 can include a central processing unit (CPU) 302, memory 304, a network interface 306, volatile storage 308, and input/output interfaces 310. The memory 304 stores executable code for applications 312 and for the operating system (OS) 314 of the quality monitoring computer/server 300. The memory 304 also stores executable quality monitoring code 316 for a quality monitoring module, training code 318 for a training module, data analytics code 320 for a data analytics module, and quality prediction code 322 for a quality prediction module, which are discussed in further detail below. The OS 314 handles coordinating the input/output of the hardware resources and executing the quality monitoring computer/server's 300 binary executable files, including the quality monitoring code 316, training code 318, data analytics code 320, and quality prediction code 322. The quality monitoring computer/server 300 can be a physical device with dedicated hardware, a device integrated with and/or embedded within the welder. Alternatively, the quality monitoring computer/server 300 can be implemented as a virtual machine that shares a part of dedicated hardware resources.

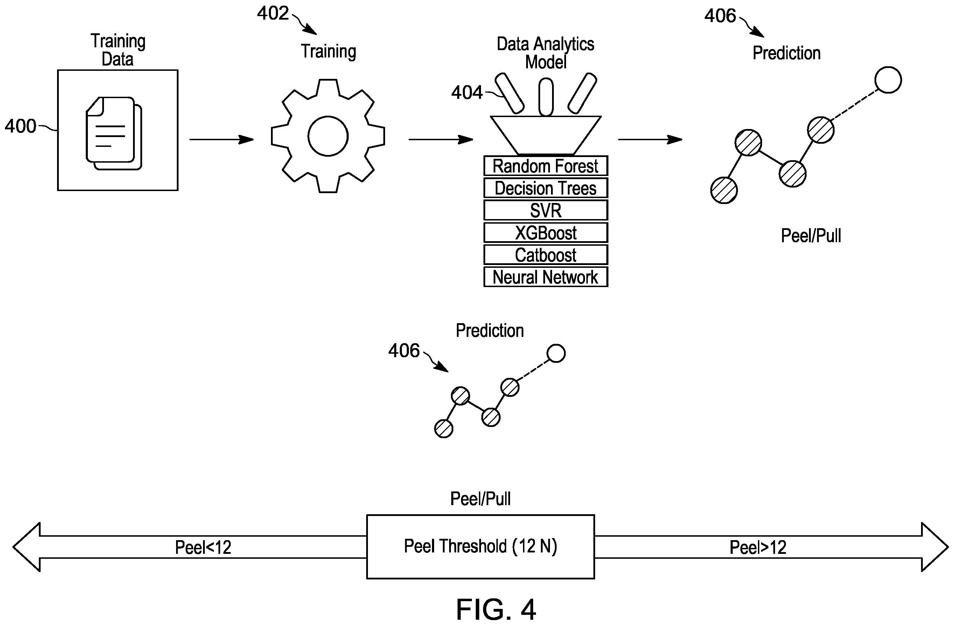

With reference to FIG. 4, an overview of the methodology for the systems and methods using data analytics and machine learning to evaluate and predict weld quality in accordance with the present disclosure is illustrated. Initially, as discussed in further detail below, training data 400 is used in a learning or training process 402 to develop and train a data analytics model 404, such as a regression model, a classification model, and/or an Al neural network model. The data analytics model 404 can include, for example, a random forest model, a decision tree model, a support vector regression model, and/or a gradient boosting regression model such as Catboost or SGBoost. The training data 400, for example, can include various weld parameters or graphs stored in association with known or actual weld quality parameters. In the training process, the weld parameters are used to train the data analytics model 404 to generate one or more predicted weld quality parameters based on the inputted weld parameters. The predicted weld quality parameter is then compared with the actual weld quality parameter for the associated inputted weld parameters and the data analytics model 404 can then be adjusted, modified, and/or tuned based on the difference between the predicted weld quality parameter(s) and the actual weld quality parameter(s). The learning or training process 402 then continues on to a next set of inputted weld parameters from the training data 400. The learning or training process 402 is continued and repeated until the data analytics model 404 is able to consistently and accurately generate a predicted weld quality parameter that is the same as, or within a predetermined tolerance of, the actual weld quality parameter for a given set of inputted weld parameters. For example, the learning or training process 402 can be continued and repeated until the accuracy of the quality predictions by the data analytics model 404 are greater than a predetermined accuracy threshold, such as 95% accuracy. Alternatively, the learning or training process 402 can be continued and repeated until all of the training data 400 has been utilized. Once the training process is complete, the data analytics model 404 can be used in a prediction process 406 on actual live weld parameter data to predict a weld quality parameter for the actual weld being performed by actual welder systems, such as ultrasonic welder systems 10, 11.

In the example of FIG. 4, the prediction process 406 is used to generate a weld quality parameter corresponding to the predicted peel strength of the weld. As illustrated in FIG. 4, in the prediction process 406, the predicted peel strength is compared to a peel threshold, which, in this case, is 12 Newtons or 12N. The results of the comparison and/or the predicted weld quality parameter, such as predicted peel strength, can be outputted and communicated to a quality control process whereby products having welds with a predicted weld quality parameter, e.g., a predicted peel strength, that is less than the predetermined threshold undergo further evaluation and/or are discarded, replaced, or repaired.

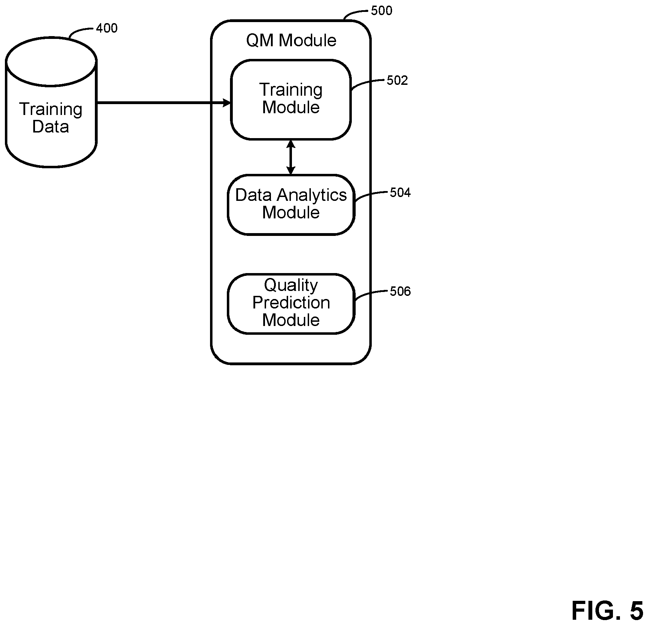

With reference to FIG. 5, a block diagram showing a quality monitoring module 500 in a training mode is shown. The quality monitoring module 500 includes a training module 502, a data analytics module 504, and a quality prediction module 506. The quality monitoring module 500, training module 502, data analytics module 504, and quality prediction module 506 can be implemented by the quality monitoring computer/server 300 executing the quality monitoring code 316, the training code 318, the data analytics code 320, and the quality prediction code 322 stored in the memory 304, as shown in FIG. 3 and discussed above. As shown in FIG. 5, the quality monitoring module 500 receives training data 400 from a computer readable storage medium accessible to the quality monitoring module 500 and the quality monitoring computer/server 300. As discussed above, the training data 400 can include various weld parameters stored in association with known or actual weld quality parameters. In the training mode, training module 502 of the quality monitoring module 500 retrieves stored weld parameters corresponding to actual welds having a known actual weld quality parameter and inputs the stored weld parameters to the data analytics module 504, which utilizes a data analytics model 404 to generate one or more predicted weld quality parameters based on the inputted weld parameters. The training module 502 then compares the predicted weld quality parameter with the actual weld quality parameter for the associated inputted weld parameters included in the training data and associated with the inputted weld parameters. Based on the comparison, the training module 502 can instruct the data analytics module 504 to adjust, modify, and tune the data analytics model 404 based on the difference between the predicted weld quality parameter and the actual weld quality parameter. The training module 502 then continues on to a next set of inputted weld parameters from the training data 400. The quality monitoring module 500 and training module 502 continue operating in this fashion in the training mode until the data analytics module 504 consistently and accurately generates a predicted weld quality parameter that is the same as, or within a predetermined tolerance of, the actual weld quality parameter for a given set of inputted weld parameters from the training data, or until the quality monitoring module 500 and training module 502 run out of additional entries in the set of training data 400. For example, quality monitoring module 50 and training module 502 can operate in the training mode until the accuracy of the quality predictions by the data analytics module 504 are greater than a predetermined accuracy threshold, such as 95% accuracy. Alternatively, the quality monitoring module 500 and training module 502 can continue operation in the training mode until all of the training data 400 has been utilized. At that point, the quality monitoring module 500 can be switched from the training mode to a quality prediction mode and can be used on actual live weld parameter data to predict a weld quality parameter for an actual weld being performed by actual welder systems, such as ultrasonic welder systems 10, 11.

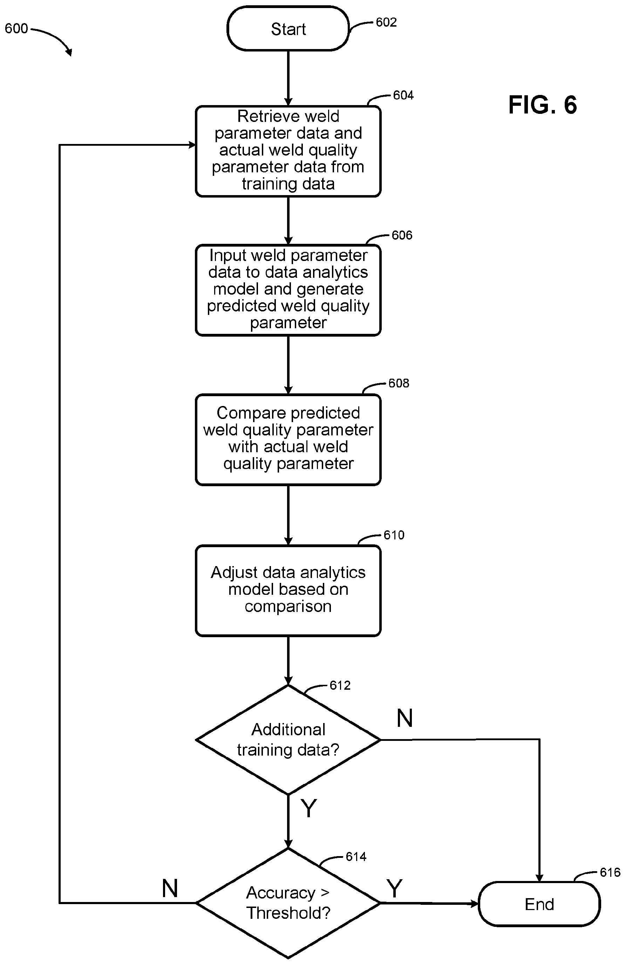

With reference to FIG. 6, a method 600 for the training process is shown and starts at 602. The method 600 can be performed by the quality monitoring computer/server 300 and, for example, the training module 502 and the data analytics module 504 of the quality monitoring module 500. At 604, the training module 502 retrieves weld parameter data and the actual weld quality parameter data from the training data 400. At 606, the training module 502 inputs the weld parameter data to the data analytics module 504, which inputs the weld parameter data to the data analytics model 404 to generate a predicted weld quality parameter. At 608, the training module 502 compares the predicted weld quality parameter with the actual weld quality parameter and, at 610, the training module instructs the data analytics module 504 to adjust the data analytics model 404 based on the comparison. At 612, the training module 502 determines whether any additional entries are available in the training data 400 for processing. At 612, when no additional entries in the training data 400 are available, the method 600 ends at 616. At 612, when additional entries are available in the training data 400, the training module proceeds to 614. At 614, the training module 502 determines whether to continue operating in the training mode by comparing the current accuracy of the predicted weld quality parameters with an accuracy threshold. For example, the training module 502 can compare the current accuracy with a predetermined accuracy threshold, such as 95% accuracy. When the data analytics module 504 is generating a predicted weld quality parameter with an accuracy that is greater than the predetermined accuracy threshold, the training module 502 proceeds to 614 and ends the training process. At 614, when current accuracy is less than the predetermined accuracy threshold, the training module 502 loops back to 604 and retrieves the next set of data from the training data 400.

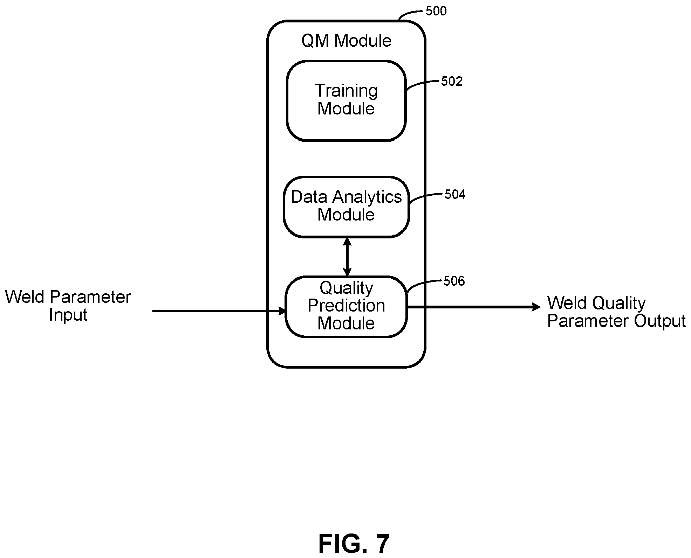

With reference to FIG. 7, a block diagram showing the quality monitoring module 500 in a quality monitoring mode is shown. In the quality monitoring mode, the quality prediction module 506 receives weld parameter input data from an actual welder system, such as ultrasonic welder systems 10, 11. As discussed in detail above, the weld parameter input data can include weld parameter data received from the ultrasonic power supply 18, from the actuator 22, and/or from sensor(s) 42, if any. The quality prediction module 506 then inputs the received weld parameter input data to the data analytics module 504, which inputs the received weld parameter input data into the data analytics model 404 to generate a predicted weld quality parameter for the weld based on the inputted weld parameter data. The data analytics module 504 returns the predicted weld quality parameter to the quality prediction module 506, which, in turn, outputs the predicted weld quality parameter. The predicted weld quality parameter can be compared to a predetermined threshold quality in a quality control process performed by the quality monitoring module 500 and/or by a separate quality control process or device. When the predicted weld quality parameter is less than the predetermined threshold quality, the weld and/or the associated product can undergo further evaluation and/or be discarded, replaced, or repaired.

In the quality monitoring mode, the quality monitoring module 500 can utilize a fixed algorithm whereby the data analytics module 504 and data analytics model 404 are fixed at the time the training process ends and are not further updated, adjusted, modified, and/or tuned during live operation in the quality monitoring mode. Alternatively, the quality monitoring module 500 can utilize an active learning algorithm whereby actual welds are tested in the field and the testing data is used to compare an actual weld quality parameter with predicted weld quality parameter outputted by the quality monitoring module 500. In such case, the quality monitoring module can then update, adjust, modify, and/or tune the data analytics model 404 based on the results of the comparison so that the accuracy of the data analytics module 504 and quality prediction module 506 can be improved during live operation and adapt to actual operation and welding conditions in the field at the facility.

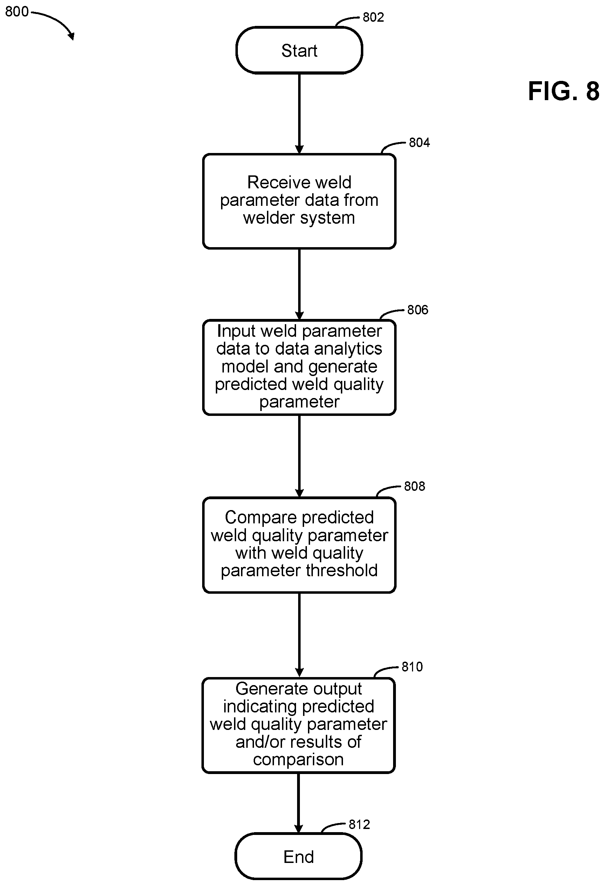

With reference to FIG. 8, a method 800 for the quality monitoring process is shown and starts at 802. The method 800 can be performed by the quality monitoring computer/server 300 and, for example, the quality prediction module 506 and the data analytics module 504 of the quality monitoring module 500. At 804, the quality prediction module 506 receives weld parameter input data from an actual welder system, such as ultrasonic welder systems 10, 11. At 806, the quality prediction module 506 inputs the weld parameter data to the data analytics module 504, which inputs the weld parameter data to the data analytics model 404 to generate a predicted weld quality parameter. At 808, the quality prediction module 506 receives the predicted weld quality parameter from the data analytics module 504 and compares the predicted weld quality parameter with a predetermined quality threshold. At 810, the quality prediction module 506 generates an output indicating the predicted weld quality parameter and/or the results of the comparison between the predicted weld quality parameter and the predetermined quality threshold. For example, when the predicted weld quality parameter is less than the predetermined threshold quality, the weld and/or the associated product can undergo further evaluation and/or be discarded, replaced, or repaired. Alternatively, in some embodiments, the comparison at 808 can be omitted and the quality prediction module 506 can simply output the predicted weld quality parameter at 810. At 811, the quality monitoring process ends.

### Data Analytics Algorithms

The quality monitoring systems and methods of the present disclosure utilize data analytics and machine learning, including regression, classification, and/or Al models and algorithms to predict or estimate the weld quality for a given weld based on weld parameters that are determined, generated, and/or sensed during the weld process. As discussed above, the systems and methods of the present disclosure can utilize supervised learning algorithms or models, such as regression and classification algorithms or models, and/or unsupervised learning algorithms or models, such as AI neural network algorithms or models. For example, the data analytics and machine learning algorithms or models utilized by the system and methods of the present disclosure can include decision tree algorithms or models, random forest algorithms or models, K nearest neighbor (KNN) algorithms or models, Naive Bayes algorithms or models, support vector machine algorithms or models, and/or Al neural network algorithms or models. In some embodiments, the quality monitoring systems and methods of the present disclosure can include a gradient boosting regression algorithm for decision trees, such as the gradient boosting regression algorithm for decision trees referred to as CatBoost and/or SGBoost. The CatBoost gradient boosting regression algorithm, for example, includes features of ordered boosting to overcome over fitting, native handling for categorical features, and using oblivious trees or symmetric trees for faster execution. The XGBoost gradient boosting regression algorithm, for example, includes features of clever penalization of trees, a proportional shrinking of leaf nodes, Newton Boosting, extra randomization parameter, and implementation on single, distributed systems and out-of-core computation. In some embodiments, the quality monitoring systems and methods of the present disclosure can include a random forest regression algorithm, also referred to as random decision forest, which is an ensemble machine learning algorithm. The random forest regression algorithm includes an ensemble learning method that operates by constructing a multitude of decision trees during the training process and outputting the class that is the mode of the classes or mean/average prediction of the individual trees.

In other embodiments, the quality monitoring systems and methods of the present disclosure can include the use of artificial neural networks to predict or estimate the weld quality for a given weld based on weld parameters that are determined, generated, and/or sensed during the weld process.

While specific data analytics algorithms are discussed above, any other machine learning (supervised/structured or unstructured/unsupervised) algorithm that includes functionality to predict or estimate a parameter, such as weld quality, based on inputted parameters that are determined, generated, and/or sensed during a process, such as a weld process, can be used in accordance with the present disclosure.

In addition, a matrix profiling anomalies method can be used to search weld graph data for anomalies, as discussed in further detail below.

### Weld Quality Parameters

The quality monitoring systems and methods of the present disclosure predict or estimate the weld quality of a weld based on inputted weld parameters that are determined, generated, and/or sensed during the weld process. As noted in the examples discussed above, the quality monitoring system of the present disclosure can generate a predicted value indicating the quality of the weld strength, such as peel strength and/or pull/tensile strength. While specific weld quality parameters are discussed in the examples above, any methodology for weld quality assessment can be used. For example, the quality monitoring systems and methods of the present disclosure can predict or estimate weld quality by predicting or estimating any of the following weld quality parameters:
- Gas leak detection to measure integrity of the weld seal.
- Testing embedded electronics by energizing electronics and measuring results. For example, a tail lamp could be lit to ensure the weld process did not damage the electronics inside.
- Tensile strength. Destructive method to pull parts apart and measure weld strength.
- Peel strength. Destructive method to peel apart a weld. More frequently used in wire splicing. Peel strength is often different that pull (tensile) strength.
- Rupture or Burst strength. Destructive method where a vessel is pressurized until burst. This is a metric of weld strength.
- Critical length measurement. This could be measured with a die, a tool to check fit, a ruler, or a laser measurement device, for example. Measurement could be of the overall part or some dimension of the weld, such as weld depth).
- Thermal sensing. welding often results in higher localized temperature within the material. Thermocouples, IR cameras, IR thermometers, or laser thermometer beams/guns can be used to measure the temperature of the weld area).
- Automatic Optical Inspection (AOI) / Video image processing. Customers take digital photos or video of the weld for record keeping and quality control. This is more prevalent in the medical industry, where traceability is more important.
- Appearance. Visual inspection by human or machine is often used to check weld quality. Inspectors look for bubbles, strands, excess weld material (aka "flash"), weld gaps (under-welding), cracks, stress lines, burn marks, and other visual features. In metal welding, customers specifically look for discoloration, a sign of oxidation. Microscopes and magnification can be used.
- Metrology, such as optical 3-D surface canning. Suppliers such as Gom, Zeiss, and Nikon, supply machines that use varying focus or lasers to determine surface dimensions. 3-D scans of parts can show how they compare with an ideal or specified part, either before or after welding.
- Measuring residual internal stresses. The welding process can create internal part stresses, which are often relaxed using thermal annealing (in an oven).
- Drop testing. Parts are dropped according to standard test methods to measure damage.
- Electric resistance or conductivity. Used in metal welding of wires and spots.
- Optical absorption. Plastics can be clear or opaque after welding, and this can be observed or measured.
- X-ray tomography. X-rays can be used to image internal structures of parts or assemblies, to look for anomalies.
- Surface profiling or surface roughness. A measurement of surface topology or roughness of a part, either near or away from the weld. There are many types of devices, that can measure this metric, such as profilometers, scanning tunneling microscopes (STM), linear variable-differential transformers, interferometric profilers, scanning probes.
- Shear strength. Destructive method that applies shear force to the weld.
- Crush resistance, compression, or deformation. Destructive test measuring compressive loads on samples, to deform, fracture, shatter, or collapse the assembly.
- Creep testing. used to determine deformation of a part under stress over time.
- Thermal testing. High temperature, low temperature, or thermal cycling to measure changes to key properties over time.
- Humidity or salt spray testing. Subjecting customer products to harsh environmental conditions.
- Young's Modulus testing. The rate of change of strain as a function of stress on the material.
- Delamination strength testing. Similar to a peel test, but for thin film applications. A "climbing drum" can be used.
- Hardness testing. Measuring the durometer of a material or part. Test equipment such as Rockwell Hardness testers, can be used.
- Hermeticity (aka air tightness or water tightness). Welds and vessels can be tested for leaks.
- Cross-sectioning. Destructive method to cut through a weld or part.
- Chemical analysis. Welded parts and assemblies may be tested for chemical composition.
- Gas chromatography. Measuring outgassing to determine chemical composition.
- Particulate measuring. Measuring for dust or weight (parts per million or particles per volume) - more likely in clean rooms, air ducts, microfluidics.
- Fatigue. repetitive motion to evaluate life or cycles of a part.
- Density. Measurement of weight per volume of a part of assembly.
- X-ray diffraction. Firing x-rays at a material to measure the profile of how the x-rays diffract after hitting the elemental particles in the sample.
- Contamination. Inspecting the weld for unusual substances, introduction of foreign material, or excess material (for example, welding tooth paste tubes, the inspection process was to look for toothpaste on the outside of the tube).
- Resonance. Testing to find resonant frequency of a part of assembly (we often have customers redesign parts because they vibrate at a resonant frequency near our welder frequency).

### Closed-Loop Corrections

As discussed in detail above, the quality monitoring systems and methods of the present disclosure utilize data analytics and machine learning algorithms and models to predict or estimate the weld quality for a given weld based on weld parameters that are determined, generated, and/or sensed during the weld process. In addition to predicting or estimating weld quality, the quality monitoring systems and methods of the present disclosure can include systems and methods for making closed-loop corrections to the weld process to adjust operational characteristics of the weld process for subsequent welds. For example, to adjust and increase weld quality, the quality monitoring systems and methods of the present disclosure can include closed-loop corrections to make adjustments to the electrical energy supplied by the power supply 18 to the ultrasonic converter 12, to make adjustments to the movements of, and force applied by, the horn 16, and/or to adjust any other controllable aspects of the weld process.

### Case Study #1

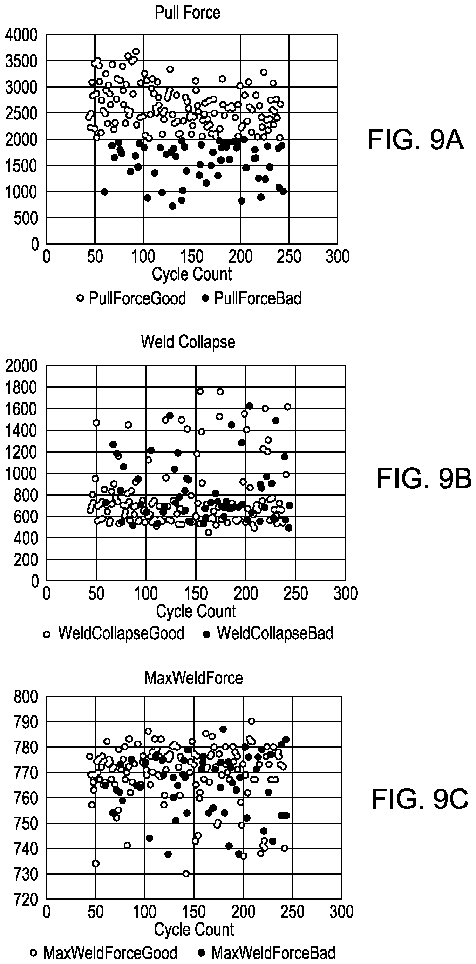

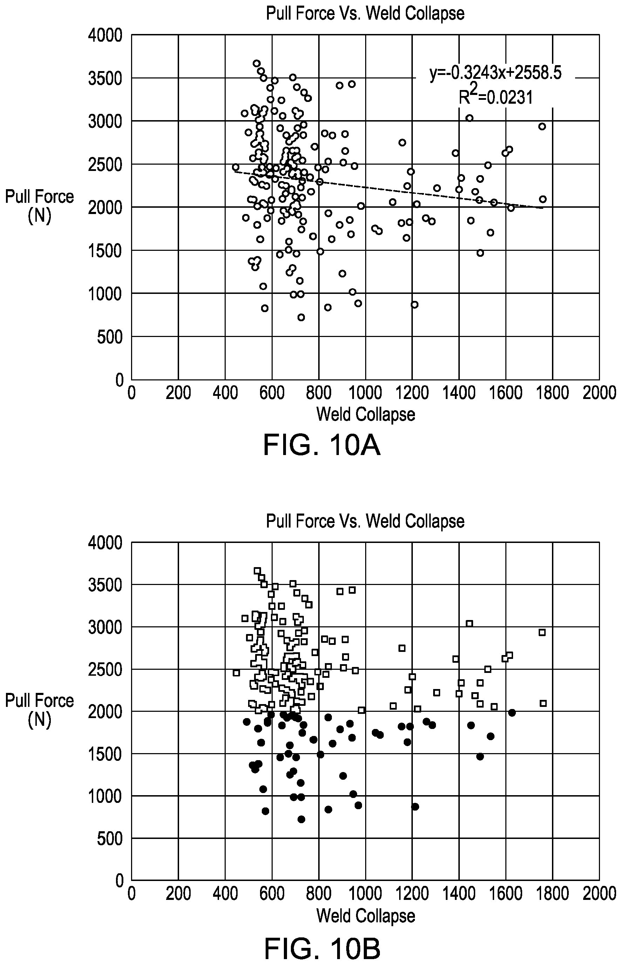

A data set was generated from 200 welds on a Branson GSX-E1 welder run in energy mode with a set recipe on plastic i-beam parts. Measured variables included max force, weld collapse, weld time, peak power, etc. Tensile strength after welding was performed and recorded, as shown in FIGs. 9A to 9C, 10A, and 10B. The following models were executed on the data to predict values of tensile strength, a quantitative measurement of weld quality:
- Decision Tree algorithm
- Random forest algorithm
- K-nearest neighbor
- Naive Bayes algorithm
- Support vector machine (SVM) algorithm
- Artificial neural network algorithm

The results were as follows:

| **ALGORITHM / MODEL** | **MODEL TRAINING ACCURACY** | **MODEL VALIDATION ACCURACY** | **MODEL TEST ACCURACY** |
|---|---|---|---|
| Decision Trees | 97% | 99% | 96% |
| Random Forest | 98% | 98% | 94% |
| KNN | 83% | 86% | 87% |
| Naive Bayes | 54% | 67% | 72% |
| Support Vector Machine | 54% | 67% | 72% |
| Artificial Neural Network | 52% | 69% | 71% |

### Case Study #2

Another data set was generated from 500 welds from a Branson GMX-W1 wire splicer. The following models were executed on the data to predict and estimate weld quality: Random Forest, Decision Trees, Support Vector Regression (SVM), XGBoost, Catboost, and Neural Network. The results were as follows:

| **REGRESSION TECHNIQUE** | **ACCURACY** |
|---|---|
| Random Forest | 97.34% |
| Decision Trees | 92.99% |
| SVR | 96.25% |
| XGBoost | 95.57% |
| Catboost | 97% |
| Neural Network | 97.34% |

These case studies have conclusively determined that the methodology of using machine learning on conventional power supply data can develop algorithms that accurately predict both metal welding and plastic joining products. This conclusion is contrary to the traditional thinking in the current state-of-the-art in academia, as summarized in the paper: Balz, I., Abi Raad, E, Rosenthal E., et. Al. Process monitoring of ultrasonic metal welding battery tabs using external sensor data. Journal of Advanced Joining Processes Vol 1 (March 2020).

### Case Study #3: Matrix Profiling Anomalies

In accordance with the present disclosure, matrix profiling anomalies method can be used to search weld graph data for anomalies, as discussed in further detail below.

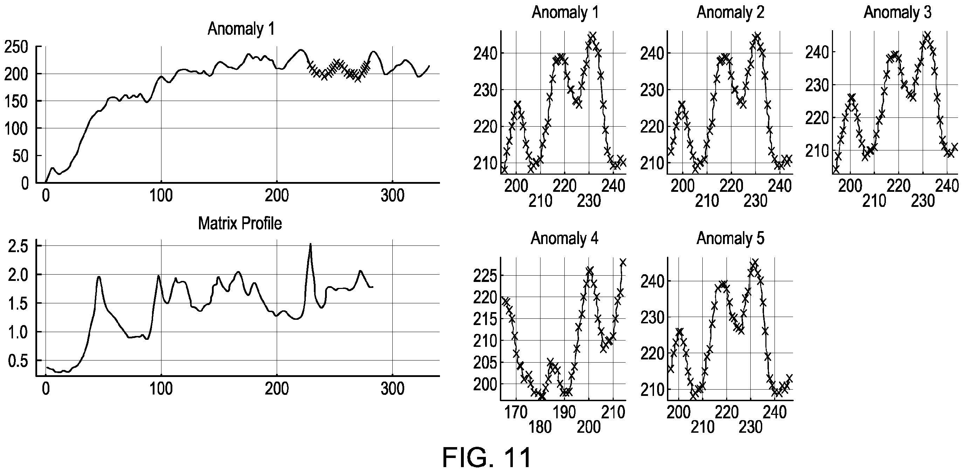

A method referred to as Matrix Profiling Anomalies was used to search weld graph data for weld anomalies. A visual representation is shown in FIG. 11. In this method, a graph of parameter vs. time (in this case weld depth vs. time and power vs. time) is split up into smaller sets of data, such as 50 data points or 50 ms intervals. These are then compared with known anomalies. The peaks of the matrix profile graph indicate significant changes in the performance.

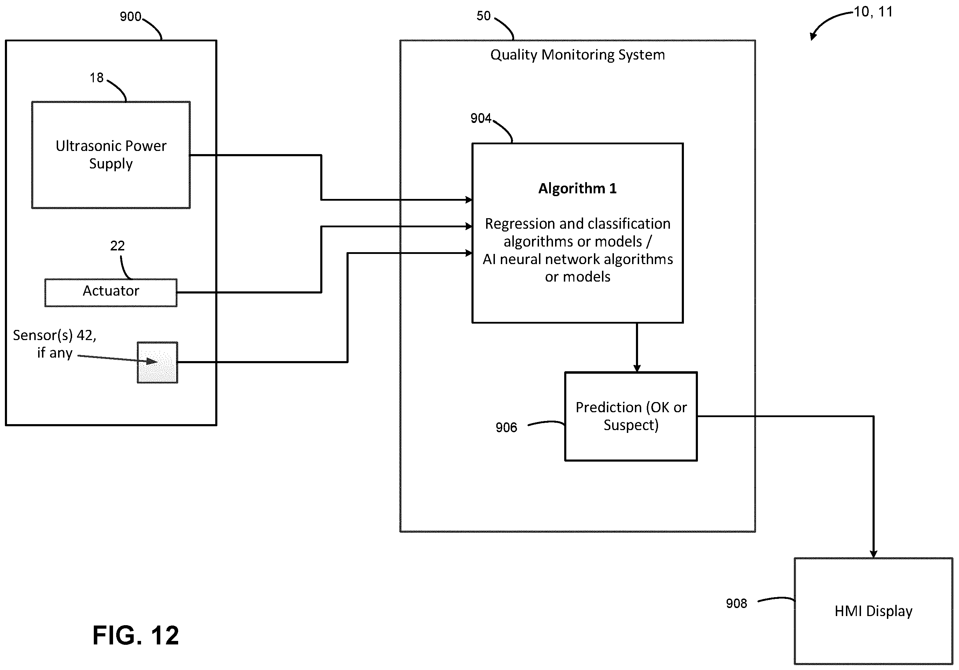

With reference to FIG. 12, a block diagram of the example ultrasonic welder systems 10, 11 is shown and includes the quality monitoring system 50, the ultrasonic power supply 18, the actuator 22, and the one or more sensors 42, if any, as described above. An ultrasonic welder device 900 can include, for example, the converter 12, booster 14, and horn 16 (not shown in FIG. 12), as described above with reference to FIGs. 1 and 2. As described above the quality monitoring system 50 can include a data analytics module 504 that uses data analytics and machine learning algorithms or models, including supervised learning algorithms or models, such as regression and classification algorithms or models, or unsupervised learning algorithms or models, such as Al neural network algorithms or models. The algorithms used by the quality monitoring system 50, e.g., the regression and classification algorithms or models / Al neural network algorithms or models, are shown at 904 in FIG. 12. As described above, the quality monitoring system 50 can receive weld parameter input, such as electrical characteristics of the electrical energy provided by the power supply 18 to the ultrasonic converter, including, for example, data indicating the electrical current, voltage, power, and/or frequency of the electrical energy provided. As further described above, the quality monitoring system 50 can receive weld parameter input that includes data related to the amount of time electrical energy is provided by the power supply 18, such as a start time, a stop time, or a time duration of the electrical energy provided for the weld. Additionally or alternatively, the quality monitoring system 50 can also receive weld parameters from the actuator 22 based on characteristics of the movement of the horn 16 by the actuator 22 including, for example, data indicating a distance/depth of movement of the horn 16, a force of the horn 16 against the parts 20, 30, and/or a velocity or down speed of the horn 16. Additionally or alternatively, the weld parameters from the actuator 22 can also include data related to weld collapse and/or weld hold of the weld 40. Additionally or alternatively, the quality monitoring system 50 can also receive weld parameters from one or more sensors 42 included in the ultrasonic welders systems 10, 11. The sensors 42, for example, can include one or more temperature sensors, laser vibrometer, position measurement sensors, stress/strain sensors, an impact sensor and/or a camera. A temperature sensor can measure and provide temperature data to the quality monitoring system 50. A laser vibrometer can measure and provide vibration data of the ultrasonic stack, or vibration data of a vibration welder in a vibration welder embodiment. Position measurement sensors can provide position data of the horn 16 and/or of the parts 20, 30 being welded. Stress/strain sensors can provide stress/strain data of the parts 20, 30 being welded. An impact sensor can provide vibration data of the ultrasonic stack. A camera can provide images data of the parts 20, 30 being welded. As described above, the quality monitoring system 50 receives the weld parameter data and utilizes data analytics and machine learning algorithms or models, shown at 904 in FIG. 12, to generate a predicted weld quality parameter and/or generate the result of a comparison of the predicted weld quality parameter with a predetermined threshold. The generated predicted weld quality parameter and/or the result of the comparison of the predicted weld quality parameter with the predetermined threshold is shown at 906 in FIG. 12. Based on the comparison, for example, the quality monitoring system 50 can classify the corresponding weld as either OK or suspect. For example, if the weld quality parameter corresponds to the predicted peel strength of the weld, the quality monitoring system 50 can classify the corresponding weld as ok if the predicted peel strength is greater than the predetermined threshold and suspect when the predicted peel strength is less than the predetermined threshold. The quality monitoring system 50 can then output the generated predicted weld quality parameter and/or the result of the comparison of the predicted weld quality parameter, i.e., the classification of either OK or suspect, to a human-machine interface (HMI) display 908. For example, the HMI display 908 can display the actual predicted weld quality parameter, such as the actual predicted pull strength of the weld, and/or the result of the comparison of the weld quality parameter with the predetermined threshold.

While the quality monitoring system 50 utilizing a single data analytics and machine learning algorithm or model, shown at 904 in FIG. 12, can determine a predicted weld quality parameter based on received weld parameter input, in some instances the quality monitoring system 50 can be thrown off by weld parameter input data includes gross anomalies. In other words, in some instances the quality monitoring system 50 utilizing the single data analytics and machine learning algorithm or model can have trouble predicting the weld quality of a weld when the weld parameter input data is too far away from the normal or average weld parameter input data.

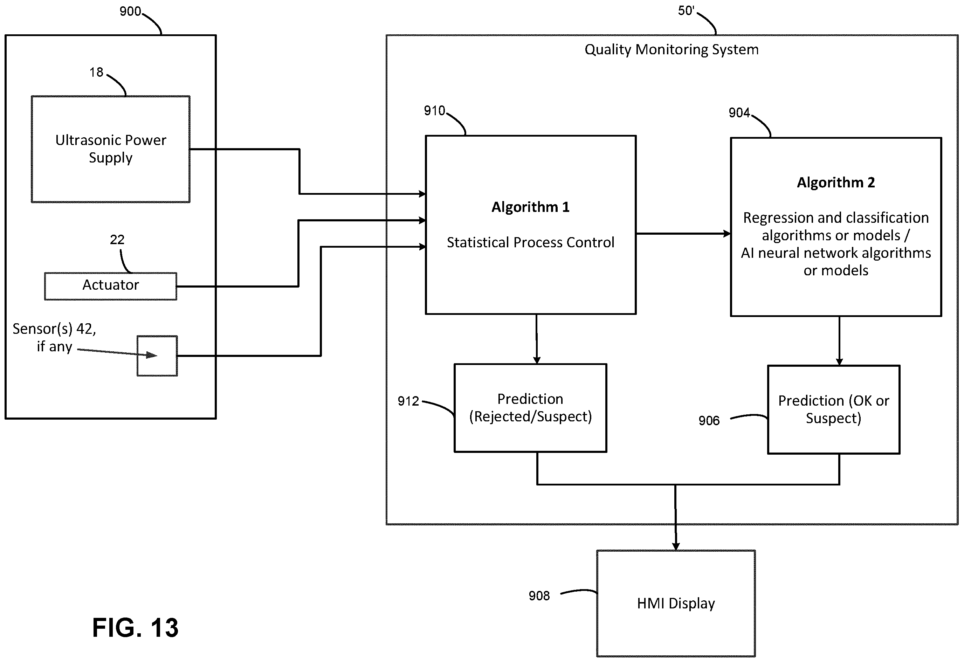

For this reason, in another embodiment shown with reference to FIG. 13, a quality monitoring system 50' can include an additional data processing layer of the weld parameter input data before the weld parameter data is input to the data analytics and machine learning algorithm or model, i.e., the regression and classification algorithms or models / Al neural network algorithms or models, which are shown at 904 in FIG. 13. For example, the quality monitoring system 50' utilizes a statistical process control (SPC) algorithm, shown at 910 in FIG. 13, to process the weld parameter input data and remove any welds that correspond to gross anomalies in the weld parameter input data before the weld parameter input data is input to the regression and classification algorithms or models / Al neural network algorithms or models at 904. For example, the SPC algorithm 910 of the quality monitoring system 50' can analyze each data value of the weld parameter input data, compare it to an SPC mean of the weld parameter input data, and reject any welds corresponding to weld parameter input data that is more than a predetermined number of standard deviations away from the SPC mean. As shown in FIG. 13, the welds rejected as suspect based on the SPC data analysis are shown at 912 in FIG. 13. Output indicating the rejected/suspect weld is outputted to the HMI display 908. If the data values of the weld parameter input data are within the predetermined number of standard deviations from the SPC mean, then the weld parameter data is input to the regression and classification algorithms or models / Al neural network algorithms or models, which are shown at 904 in FIG. 13, for processing, as discussed in detail above with respect to FIG. 12. As described above, the predicted weld quality parameter and/or the results of the comparison of the predicted weld quality parameter with a predetermined threshold can be display on the HMI display 908.

In this way, the accuracy of the quality monitoring system 50' can be improved by the use of multiple algorithms, including an SPC algorithm 910 to analyze the weld parameter input data and remove gross anomalies before the weld parameter data is input to the regression and classification algorithms or models / Al neural network algorithms or models 904. In this way, the weld parameter data is pre-processed or filtered to remove gross anomalies before processing by to the regression and classification algorithms or models / Al neural network algorithms or models 904. As examples, welds that generate weld parameter input data having gross anomalies can be the result of: an excess number of layers of metal foil, too few layers of metal foil, material samples that have oil on them thereby decreasing friction, use of the wrong metal, welds without the proper end pieces or covers, welds in the wrong area, a single sample twice, material with oxidation, the horn tip is not well aligned with the fixture, the wrong horn or anvil is used, and/or any other issue that generates gross anomalies in the weld parameter input data.

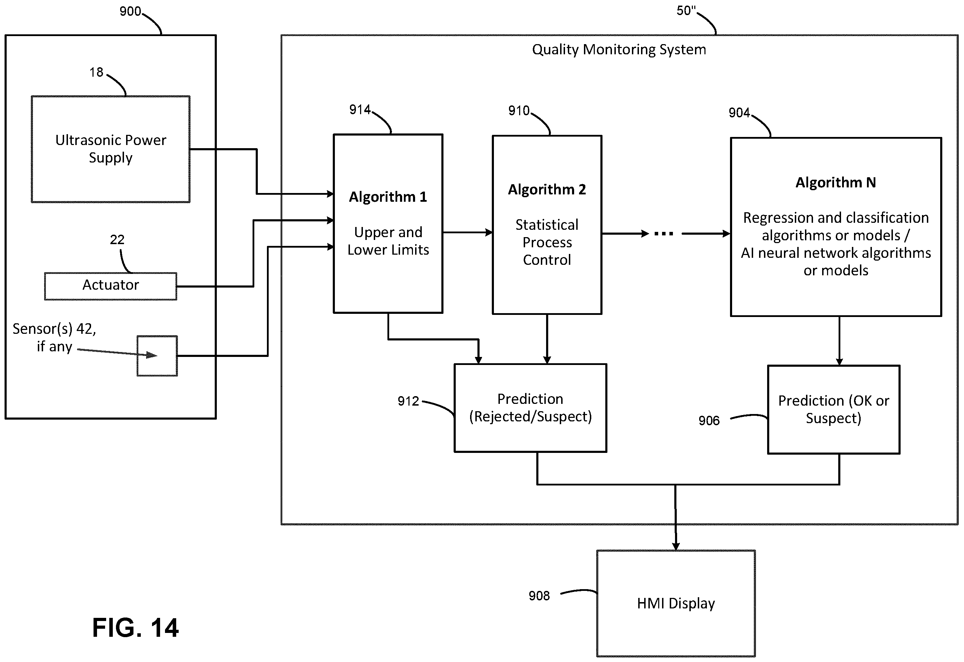

While FIG. 13 illustrates the use of two layers of data processing, i.e., SPC algorithm 910 and regression and classification algorithms or models / Al neural network algorithms or models 904, additional layers of data processing can also be used for to further increase the accuracy of the system. For example, with reference to FIG. 14, another embodiment of a quality monitoring system 50" that utilizes 3 or more algorithms is shown. The quality monitoring system 50" is similar to the quality monitoring system 50', except that the quality monitoring system 50" utilizes an upper and lower limits algorithm 914 prior to the SPC algorithm 910. The upper and lower limits algorithm 914, for example, can be used to compare the data values of the weld parameter input data to high and low thresholds. Any welds with corresponding weld parameter input data that is outside of the upper and lower limits, i.e., higher than the upper limit threshold and lower than the lower limit threshold, can be rejected as suspect at 912. Any welds with corresponding weld parameter input data within the high and low thresholds can be passed to the SPC algorithm for processing similar to that described above with reference to the quality monitoring system 50' shown in FIG. 12. The upper and lower limits can be predetermined thresholds and/or can be user adjustable thresholds. For example, the upper and lower limits can be initialized with a default threshold setting that can be adjusted by a user of the quality monitoring system 50".

While three algorithms are shown in FIG. 13, any number (N) of algorithms can be used. For example, additional layers of regression and classification algorithms or models and/or Al neural network algorithms or models can be included between the SPC algorithm 910 and regression and classification algorithms or models / Al neural network algorithms or models 904. Further, the regression and classification algorithms or models / Al neural network algorithms or models shown at 904 can be broken up into multiple layers. For example, one layer of data processing can include processing using regression and classification algorithms or models while a separate layer can include processing using Al neural network algorithms or models. For example, a quality monitoring system can utilize four layers of data processing, including: an upper and lower limits algorithm layer; an SPC algorithm layer; a regression and classification layer utilizing a decision tree algorithm, a random forest algorithm, KNN algorithm, a Naive Bayes algorithm, etc.; and an Al neural network algorithm layer.

In this way, the use of multiple layers of data processing algorithms can more effectively remove gross anomalies in the weld parameter input data and more accurately predict weld quality. As such, the use of multiple layers of data processing algorithms renders the system more robust and less subject to noise and anomalous data.

As with the above embodiments, the HMI display 908 can display an output indicating the predicted weld quality parameters and/or the results of a comparison of the predicted weld quality parameter with a predetermined threshold. The HMI display 908 can also display an output indicated that a particular weld was rejected as suspect based on a particular processing algorithm, such as an upper and lower limits algorithm 914 or the SPC algorithm 910.

### Case Study #4: End-to-End example

In accordance with the present disclosure, another set of approximately 1,000 records of process data were generated in a lab and used for training a model. In this case study, ultrasonic process coming out of the welding machine was highly non-linear in nature, had negative correlation among fields, and had very few failure cases. Training data was preprocessed for missing attributes, attribute values, noise or outliers and duplicate before modelling.

Additionally, Synthetic Minority Oversampling Technique (SMOTE) was applied to overcome the data imbalance. SMOTE is described in "SMOTE: Synthetic Minority Over-sampling Technique," Journal of Artificial Intelligence Research 16 (2002) 321-357, published 06/02.

The training data included the following columns: Cycle count, Pull Force, Energy, Trigger Pressure, Pressure, Amplitude, Time, Power, Pre-Height, and Height.

### Modelling & Training Process

As part of the modelling exercise feature importance for each feature (column) was calculated using: dimension reduction machine learning techniques Principal Component Analysis (PCA), as described in "Multivariate Statistical Data Analysis-Principal Component Analysis (PCA)," International Journal of Livestock Research, 7(5), 60-78, (2017); Polynomial feature, as described in "Feature modeling using polynomial classifiers and stepwise regression," Neurocomputing, Volume 73, Issues 10-12, June 2010, pages 1752-1759; and Generalized Discriminant Analysis (GDA), as described in "Generalized Discriminant Analysis algorithm for feature reduction in Cyber Attack Detection," International Journal of Computer Science and Information Security (IJCSIS), Vol. 6, No. 1, 2009.

The training data was split into 70% training and 30% test data and five algorithms for non-linear data were trained using their respective hyperparameters. Model weights were initialized randomly, and a Stochastic Gradient Descent (SGD), as described in "An overview of gradient descent optimization algorithms, arXiv:1609.94747v2, June 15, 2017, was used to adjust the weights as part of the training.

All models had features "Power(N)," "Weld time (sec)," "Height(mm)" and "Pre-height(mm)," and "Pull Force(N)" as the output, as shown here:

| **Cycle Count** | **Energy** | **Weld Time (sec)** | **Power (N)** | **Pre-height (mm)** | **Height (mm)** | **Pull Force (N)** |
|---|---|---|---|---|---|---|
| 2 | 400 | 0.26 | 1580.00 | 10.24 | 10.12 | 29 |
| 3 | 401 | 0.26 | 1600.00 | 10.24 | 10.06 | 125.7 |
| 4 | 401 | 0.29 | 1460.00 | 10.24 | 10.08 | 139.3 |
| 5 | 401 | 0.3 | 1460.00 | 10.26 | 10.04 | 194 |
| 6 | 400 | 0.31 | 1400.00 | 10.24 | 10.06 | 214.4 |
| 7 | 400 | 0.32 | 1360.00 | 10.24 | 10.06 | 195.6 |

### Model Evaluation

Trained models were tested and evaluated against the 30% validation data and also with a synthetic version of real data keeping almost all statistical properties of the original data intact. Random forest and CatBoost resulted in the best performance. The table of results for model evaluation is as follows:

| **Regressor-Classifier** | **Threshold = 200N** | **Threshold = 175N** | **Threshold = 150N** |
|---|---|---|---|
| Random Forest | 93.54 | 96.77 | 100 |
| CatBoost | 95.16 | 96.77 | 100 |
| XGB | 90.32 | 96.77 | 100 |
| SVR | 93.54 | 96.77 | 100 |
| ANN | 93.54 | 96.77 | 100 |

The model was trained on a dataset with 700 rows. The predictions were based on a dataset with 300 rows.

### Model Prediction

The best performing model was chosen to be deployed as part of the deployable analytics engine code.

Process data flow to model is orchestrated such that during live welding sessions, the model would receive process data for every weld, which it then used to predict the resulting possible "Pull force."

| **Time** | **Power** | **Pre-Height** | **Height** | **Predicted Pull Force** | **Threshold** | **Good/ Suspect** |
|---|---|---|---|---|---|---|
| 0.44 | 1451 | 10.56 | 10.38 | 158 | 150 | Good |
| 0.73 | 521 | 9.78 | 9.66 | 123 | 150 | Suspect |

The predicted pull force is then compared against the minimum threshold Pull force which determines the weld quality. If the predicted pull force is less than the threshold, the weld job is classified as suspect. Otherwise, the weld job is classified as good.

### Case Study #5: Automated Machine Learning

In accordance with the present disclosure, an automated machine learning feature allows users of the weld analytics engine to train their own models using their data on-premises to avoid sending production data out for offline modelling and training.

With this feature, the weld analytics engine can automatically evaluate and select the best algorithms and/or stack of algorithms, along with optimal hyperparameter values for a given training dataset. In this way, the present automated machine learning feature automates the selection, composition, and parameterization of the machine learning models and leverages recent advantages in Genetic Programming, Stochastic Bayesian optimization and ensemble construction.

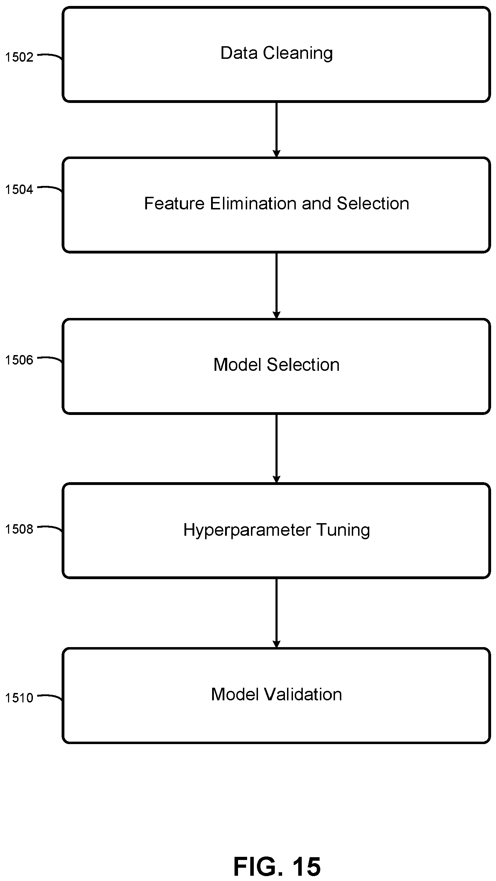

The system automates some of the common tasks required to build and evaluate a good predictive model or ensemble with optimal hyper parameter values for a given dataset. For example, as shown in FIG. 15, the system automates the following tasks, including: data cleaning 1502, feature elimination and selection 1504, model selection 1506, hyperparameter tuning 1508, and model validation 1510. As a result, the automation system builds the best pipeline of actions to be performed for a good predictive mode/ensemble model. The pipeline is updated frequently as the system tries to find better performing algorithms and tuning values by trying to fit many machine learning algorithms with their own parameter values and multiple preprocessing steps for the given dataset.

The system uses a genetic programming algorithm to find the highest-scoring pipeline by comparing the cross-validation score, i.e., accuracy for every generation. The system searches over a broad range of estimators, feature selectors, feature constructors, algorithms, models, and parameters to find a series of operators that minimize the error of the model predictions. The best scores for multiple generations are shown below (Best pipeline: LinearSVR (input_matrix, C=5.0, dual=False, epsilon=1.0, loss=squared_spsilon_insensitive, tol=0.1):

| |
|---|
| Generation 1 - Current best internal CV score: -7.380055494232506 |
| Generation 2 - Current best internal CV score: -7.380055494232506 |
| Generation 3 - Current best internal CV score: -7.380055494232506 |
| Generation 4 - Current best internal CV score: -7.380055494232506 |
| Generation 5 - Current best internal CV score: -7.380055494232506 |
| ... |
| Generation 100 - Current best internal CV score: -7.290683170843617 |

The following table contains two predicted pull force columns: (1) Predictions of fine-tuned model; and (2) Predictions from automated machine learning (AutoML). The data corresponds to an automotive battery welding application and the resulting test accuracy was 97.8%.

| **Weld Time (sec)** | **Pre-Height (mm)** | **Post-Height (mm)** | **Peak Power (Watts)** | **Collapse (mm)** | **Actual Pull Force (N)** | **Predicted_Pull_ Force** | **Absolute Delta** | **Predicted Results** | **Actual Result** | **Predicted _Pull_ Force (AutoML)** | **Absolute Delta (AutoML)** |
|---|---|---|---|---|---|---|---|---|---|---|---|
| 0.47 | 9.58 | 9.44 | 579 | 0.14 | **81.5** | 84.6668 | 3.1668 | 1 | 1 | 88.49838214 | -3.83158214 |
| 0.47 | 9.58 | 9.44 | 596 | 0.14 | **80.1** | 82.4639 | 2.3639 | 1 | 1 | 92.13723943 | -9.67333943 |
| 0.47 | 9.58 | 9.42 | 593 | 0.16 | **88.1** | 92.37316667 | 4.273166667 | 1 | 1 | 90.76853605 | 1.604630617 |
| 0.46 | 9.58 | 9.42 | 605 | 0.16 | **92.8** | 97.46047172 | 4.660471717 | 1 | 1 | 94.52710502 | 2.933366697 |
| 0.5 | 9.58 | 9.44 | 591 | 0.14 | **83** | 84.615 | 1.615 | 1 | 1 | 93.665193 | -9.050193 |
| 0.45 | 9.58 | 9.42 | 608 | 0.16 | **101.4** | 98.80181667 | 2.598183333 | 1 | 1 | 95.8958084 | 2.906008267 |
| 0.46 | 9.58 | 9.42 | 605 | 0.16 | **102.3** | 97.46047172 | 4.839528283 | 1 | 1 | 94.52710502 | 2.933366697 |
| 0.51 | 9.58 | 9.44 | 566 | 0.14 | **75** | 76.0648 | 1.0648 | 1 | 1 | 87.82896001 | -11.76416 |
| 0.44 | 9.58 | 9.44 | 612 | 0.14 | **84** | 86.667 | 2.667 | 1 | 1 | 97.72074624 | -11.0537462 |
| 0.47 | 9.58 | 9.44 | 590 | 0.14 | **78.9** | 85.549 | 6.649 | 1 | 1 | 89.39983267 | -3.85083267 |
| 0.45 | 9.58 | 9.42 | 620 | 0.16 | **116.7** | 101.133 | 15.567 | 1 | 1 | 101.3706219 | -0.23762193 |
| 0.46 | 9.58 | 9.44 | 602 | 0.14 | **109** | 102.41545 | 6.58455 | 1 | 1 | 93.15840163 | 9.25704837 |
| 0.47 | 9.58 | 9.42 | 605 | 0.16 | **86.5** | 89.84358212 | 3.343582121 | 1 | 1 | 96.24334958 | -6.39976746 |
| 0.45 | 9.58 | 9.44 | 615 | 0.14 | **102.3** | 94.00525714 | 8.294742857 | 1 | 1 | 99.08944962 | -5.08419248 |
| 0.5 | 9.58 | 9.44 | 593 | 0.14 | **112.9** | 101.5298 | 11.3702 | 1 | 1 | 94.57766202 | 6.95213798 |
| 0.47 | 9.58 | 9.44 | 593 | 0.14 | **103.7** | 95.723 | 7.977 | 1 | 1 | 90.76853605 | 4.95446395 |
| 0.47 | 9.58 | 9.42 | 592 | 0.16 | **101.7** | 96.94416667 | 4.755833333 | 1 | 1 | 90.31230159 | 6.631865077 |
| 0.44 | 9.58 | 9.42 | 615 | 0.16 | **97.5** | 97.0485 | 0.4515 | 1 | 1 | 99.08944962 | -2.04094962 |
| 0.48 | 9.58 | 9.44 | 596 | 0.14 | **79.4** | 82.2638 | 2.8638 | 1 | 1 | 92.4824284 | -10.2186284 |
| 0.46 | 9.58 | 9.44 | 595 | 0.14 | **89.6** | 92.655 | 3.055 | 1 | 1 | 89.96476041 | 2.69023959 |
| 0.49 | 9.58 | 9.44 | 547 | 0.14 | *74.2* | 77.44658333 | 3.246583333 | 1 | 1 | 79.87013072 | -2.42354739 |
| 0.51 | 9.58 | 9.44 | 546 | 0.14 | *79.8* | 85.552 | 5.752 | 1 | 1 | 81.05284405 | 4.49915595 |
| 0.49 | 9.58 | 9.44 | 564 | 0.14 | **96.9** | 92.523 | 4.377 | 1 | 1 | 85.27754329 | 7.24545671 |
| 0.54 | 9.58 | 9.44 | 536 | 0.14 | *79.9* | 79.2586 | 0.6414 | 1 | 1 | 76.49049945 | 2.76810055 |
| 0.48 | 9.58 | 9.44 | 560 | 0.14 | **101.2** | 93.431 | 7.769 | 1 | 1 | 83.4557084 | 9.9752916 |
| 0.5 | 9.58 | 9.44 | 556 | 0.14 | *85* | 84.2121 | 0.7879 | 1 | 1 | 85.09470755 | -0.88260755 |
| 0.61 | 9.58 | 9.44 | 501 | 0.14 | *60* | 68.2286 | 8.2286 | 1 | 1 | 60.52229332 | 7.70630668 |
| 0.48 | 9.58 | 9.44 | 566 | 0.14 | **85.1** | 84.728 | 0.372 | 1 | 1 | 83.8445419 | 0.8834581 |
| 0.57 | 9.58 | 9.46 | 482 | 0.12 | *49.3* | 0 | 0 | 0 | 0 | 51.85383856 | -51.8538386 |
| 0.48 | 9.58 | 9.44 | 558 | 0.14 | **87.8** | 86.81465 | 0.98535 | 1 | 1 | 82.54323948 | 4.27141052 |
| 0.48 | 9.58 | 9.44 | 583 | 0.14 | **79.3** | 82.5774 | 3.2774 | 1 | 1 | 88.53842938 | -5.96102938 |
| 0.46 | 9.58 | 9.44 | 579 | 0.14 | **91.7** | 89.9674 | 1.7326 | 1 | 1 | 86.78213758 | 3.18526242 |
| 0.5 | 9.58 | 9.44 | 565 | 0.14 | *75.4* | 79.1677 | 3.7677 | 1 | 1 | 86.85224444 | -7.68454444 |
| 0.51 | 9.58 | 9.44 | 551 | 0.14 | *91.2* | 88.0351 | 3.1649 | 1 | 1 | 83.33401636 | 4.70108364 |
| 0.51 | 9.58 | 9.44 | 554 | 0.14 | *79.7* | 83.15135 | 3.45135 | 1 | 1 | 84.70271974 | -1.55136974 |
| 0.46 | 9.58 | 9.44 | 581 | 0.14 | **87.7** | 87.9941 | 0.2941 | 1 | 1 | 86.3010596 | 1.6930404 |
| 0.47 | 9.58 | 9.44 | 585 | 0.14 | **86.2** | 84.8367 | 1.3633 | 1 | 1 | 89.10570933 | -4.26900933 |
| 0.47 | 9.58 | 9.44 | 524 | 0.14 | *56.3* | 64.06995333 | 7.769953333 | 1 | 1 | 66.68607884 | -2.61612551 |
| 0.46 | 9.58 | 9.44 | 573 | 0.14 | **75.9** | 79.3536 | 3.4536 | 1 | 1 | 84.43695298 | -5.08335298 |
| 0.46 | 9.58 | 9.44 | 577 | 0.14 | **86.6** | 86.8568 | 0.2568 | 1 | 1 | 86.26189082 | 0.59490918 |
| 0.49 | 9.58 | 9.44 | 577 | 0.14 | **81.3** | 81.7887 | 0.4887 | 1 | 1 | 90.66879467 | -8.88009467 |
| 0.48 | 9.58 | 9.44 | 559 | 0.14 | **81.6** | 85.025 | 3.425 | 1 | 1 | 82.99947394 | 2.02552606 |
| 0.5 | 9.58 | 9.46 | 550 | 0.12 | *84* | 82.327435 | 1.672565 | 1 | 1 | 82.35730079 | -0.02986579 |
| 0.58 | 9.58 | 9.46 | 514 | 0.12 | *76.2* | 0 | 0 | 0 | 1 | 66.45334131 | -66.4533413 |
| 0.47 | 9.58 | 9.44 | 577 | 0.14 | **89.2** | 86.8012 | 2.3988 | 1 | 1 | 87.97813538 | -1.17693538 |
| 0.48 | 9.58 | 9.44 | 571 | 0.14 | **84.5** | 84.199 | 0.301 | 1 | 1 | 86.1257142 | -1.9267142 |
| 0.57 | 9.58 | 9.44 | 525 | 0.14 | *78.2* | 78.8137 | 0.6137 | 1 | 1 | 71.47192038 | 7.34177962 |
| 0.51 | 9.58 | 9.44 | 546 | 0.14 | *93.3* | 85.552 | 7.748 | 1 | 1 | 81.05284405 | 4.49915595 |
| 0.5 | 9.58 | 9.44 | 562 | 0.14 | **86.2** | 86.027 | 0.173 | 1 | 1 | 87.83211432 | -1.80511432 |
| 0.53 | 9.58 | 9.44 | 542 | 0.14 | *71.1* | 75.4497 | 4.3497 | 1 | 1 | 79.22790621 | -3.77820621 |

In this way, the systems and methods of the present disclosure include using different algorithms and models on the test data, evaluating and selecting the algorithm or model that most accurately predicts weld quality, and then using the selected algorithm or model going forward to predict weld quality using live weld parameter data.

In addition, once the quality monitoring system is used in the field over time, the welder hardware and other system components may be subject to process drift and may not perform the same as when the quality monitoring system was first installed. As such, the present disclosure includes updating the quality monitoring system to tune and check the selected algorithm or model used by the quality monitoring system to account for the process drift due to the use of the system in the field over time. For example, the quality monitoring system can be used on a new set of test data and the algorithm or model used by the internal parameters used by the quality monitoring system can be retuned and recalibrated in the field to account for process drift and more accurately predict weld quality. In other words, the data analytics model can be recalibrated after the welder has been operated in the field by utilizing a tuning procedure based on actual weld data that associates weld parameter data with weld quality data.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. It should be understood that one or more steps within a method may be executed in different order (or concurrently) without altering the principles of the present disclosure. Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules) are described using various terms, including "connected," "engaged," "interfaced," and "coupled." Unless explicitly described as being "direct," when a relationship between first and second elements is described in the above disclosure, that relationship encompasses a direct relationship where no other intervening elements are present between the first and second elements, and also an indirect relationship where one or more intervening elements are present (either spatially or functionally) between the first and second elements.

As used herein, the phrase at least one of A, B, and C should be construed to mean a logical (A OR B OR C), using a non-exclusive logical OR. For example, the phrase at least one of A, B, and C should be construed to include any one of: (i) A alone; (ii) B alone; (iii) C alone; (iv) A and B together; (v) A and C together; (vi) B and C together; (vii) A, B, and C together. The phrase at least one of A, B, and C should not be construed to mean "at least one of A, at least one of B, and at least one of C."

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A. The term subset does not necessarily require a proper subset. In other words, a first subset of a first set may be coextensive with (equal to) the first set.

In this application, including the definitions below, the term "module" or the term "controller" may be replaced with the term "circuit." The term "module" may refer to, be part of, or include processor hardware (shared, dedicated, or group) that executes code and memory hardware (shared, dedicated, or group) that stores code executed by the processor hardware.

The module may include one or more interface circuits. In some examples, the interface circuit(s) may implement wired or wireless interfaces that connect to a local area network (LAN) or a wireless personal area network (WPAN). Examples of a LAN are Institute of Electrical and Electronics Engineers (IEEE) Standard 802.11-2016 (also known as the WIFI wireless networking standard) and IEEE Standard 802.3-2015 (also known as the ETHERNET wired networking standard). Examples of a WPAN are IEEE Standard 802.15.4 (including the ZIGBEE standard from the ZigBee Alliance) and, from the Bluetooth Special Interest Group (SIG), the BLUETOOTH wireless networking standard (including Core Specification versions 3.0, 4.0, 4.1, 4.2, 5.0, and 5.1 from the Bluetooth SIG).

The module may communicate with other modules using the interface circuit(s). Although the module may be depicted in the present disclosure as logically communicating directly with other modules, in various implementations the module may actually communicate via a communications system. The communications system includes physical and/or virtual networking equipment such as hubs, switches, routers, and gateways. In some implementations, the communications system connects to or traverses a wide area network (WAN) such as the Internet. For example, the communications system may include multiple LANs connected to each other over the Internet or point-to-point leased lines using technologies including Multiprotocol Label Switching (MPLS) and virtual private networks (VPNs).

In various implementations, the functionality of the module may be distributed among multiple modules that are connected via the communications system. For example, multiple modules may implement the same functionality distributed by a load balancing system. In a further example, the functionality of the module may be split between a server (also known as remote, or cloud) module and a client (or, user) module. For example, the client module may include a native or web application executing on a client device and in network communication with the server module.

The term code, as used above, may include software, firmware, and/or microcode, and may refer to programs, routines, functions, classes, data structures, and/or objects. Shared processor hardware encompasses a single microprocessor that executes some or all code from multiple modules. Group processor hardware encompasses a microprocessor that, in combination with additional microprocessors, executes some or all code from one or more modules. References to multiple microprocessors encompass multiple microprocessors on discrete dies, multiple microprocessors on a single die, multiple cores of a single microprocessor, multiple threads of a single microprocessor, or a combination of the above.

Shared memory hardware encompasses a single memory device that stores some or all code from multiple modules. Group memory hardware encompasses a memory device that, in combination with other memory devices, stores some or all code from one or more modules.

The term memory hardware is a subset of the term computer-readable medium. The term computer-readable medium, as used herein, does not encompass transitory electrical or electromagnetic signals propagating through a medium (such as on a carrier wave); the term computer-readable medium is therefore considered tangible and non-transitory. Non-limiting examples of a non-transitory computer-readable medium are nonvolatile memory devices (such as a flash memory device, an erasable programmable read-only memory device, or a mask read-only memory device), volatile memory devices (such as a static random access memory device or a dynamic random access memory device), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general purpose computer to execute one or more particular functions embodied in computer programs. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective C, Swift, Haskell, Go, SQL, R, Lisp, Java^{®}, Fortran, Perl, Pascal, Curl, OCaml, JavaScript^{®}, HTML5 (Hypertext Markup Language 5th revision), Ada, ASP (Active Server Pages), PHP (PHP: Hypertext Preprocessor), Scala, Eiffel, Smalltalk, Erlang, Ruby, Flash^{®}, Visual Basic^{®}, Lua, MATLAB, SIMULINK, and Python^{®}.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

## Claims

1. A system comprising:
a computer having a processor and memory configured to:
receive weld parameter data generated during a welding process by a welder to join at least two parts with a weld;
input the received weld parameter data to a data analytics model to generate at least one predicted weld quality parameter;
compare the predicted weld quality parameter with a weld quality parameter threshold; and
generate output indicating at least one of: the at least one predicted weld quality parameter and a result of the comparison between the at least one predicted weld quality parameter and the weld quality parameter threshold.

2. The system of claim 1, wherein the data analytics model is trained during a training procedure based on actual weld data that associates weld parameter data with weld quality data.

3. The system of claim 1 or claim 2, wherein the data analytics model is based on at least one of a supervised learning algorithm, an unsupervised learning algorithm, a regression algorithm, a classification algorithm, an artificial intelligence neural network algorithm, a decision tree algorithm, a random forest algorithm, a K nearest neighbor algorithm, a Naive Bayes algorithm, a support vector machine algorithm, and a gradient boosting regression algorithm.

4. The system of any one of the preceding claims, wherein the at least one predicted weld quality parameter represents at least one of a peel strength, a pull/tensile strength, a burst pressure, and an optical appearance of the weld.

5. The system of any one of the preceding claims, wherein the weld parameter data generated during the welding process includes:
(a) data generated by an ultrasonic power supply of the welder corresponding to electrical energy supplied by the ultrasonic power supply of the welder to an ultrasonic converter of the welder, including at least one of electrical current data, voltage data, power data, and frequency data; and/or
(b) data generated by an actuator that moves a horn of the welder, including at least one of a distance/depth of movement, a force of the horn, and a velocity/down speed of the horn; and/or
(c) data generated by at least one sensor, the at least one sensor including at least one of a temperature sensor, a laser vibrometer, a position measurement sensor, a stress/strain sensor, an impact sensor, and a camera.

6. The system of any one of the preceding claims, wherein the weld parameter data includes weld graph data having a series weld parameter values over a time period of the welding process;
optionally wherein the processor and memory are further configured to analyze the weld graph data using matrix profiling to identify anomalies within the weld graph data.

7. The system of any one of the preceding claims, wherein the at least two parts includes a bundle of wires.

8. The system of any one of the preceding claims, wherein the welder is one of an ultrasonic welder, a laser welder, a vibration/friction welder, an infrared welder, a combined vibration welder with an infrared preheat system, a spin welder, and a hot plate welder.

9. The system of any one of the preceding claims, wherein the data analytics model is configured to be recalibrated after the welder has been operated in the field by utilizing a tuning procedure based on actual weld data that associates weld parameter data with weld quality data.

10. A method comprising:
receiving, with a computer having a processor and memory, weld parameter data generated during a welding process by a welder to join at least two parts with a weld;
inputting, with the computer, the received weld parameter data to a data analytics model to generate at least one predicted weld quality parameter;
comparing, with the computer, the at least one predicted weld quality parameter with a weld quality parameter threshold; and
generating, with the computer, output indicating at least one of the at least one predicted weld quality parameter and a result of the comparison between the at least one predicted weld quality parameter and the weld quality parameter threshold.

11. The method of claim 10, further comprising training the data analytics model during a training procedure based on actual weld data that associates weld parameter data with weld quality data.

12. The method of claim 10 or claim 11, wherein the data analytics model includes at least one of a supervised learning algorithm, an unsupervised learning algorithm, a regression algorithm, a classification algorithm, an artificial intelligence neural network algorithm, a decision tree algorithm, a random forest algorithm, a K nearest neighbor algorithm, a Naive Bayes algorithm, a support vector machine algorithm, and a gradient boosting regression algorithm.

13. The method system of any one of claims 10 to 12, wherein the at least one predicted weld quality parameter represents at least one of a peel strength, a pull/tensile strength, a burst pressure of the weld, and an optical appearance of the weld.

14. The method of any one of claims 10 to 13, wherein the weld parameter data generated during the welding process includes:
(a) data generated by an ultrasonic power supply of the welder corresponding to electrical energy supplied by the ultrasonic power supply of the welder to an ultrasonic converter of the welder, including at least one of electrical current data, voltage data, power data, and frequency data; and/or
(b) data generated by an actuator that moves a horn of the welder, including at least one of a distance/depth of movement, a force of the horn, and a velocity/down speed of the horn; and/or
(c) data generated by at least one sensor, the at least one sensor including at least one of a temperature sensor, a laser vibrometer, a position measurement sensor, a stress/strain sensor, an impact sensor, and a camera.

15. The method of any one of claims 10 to 14, wherein the weld parameter data includes weld graph data having a series weld parameter values over a time period of the welding process;
the method optionally further comprising analyzing, with the computer, the weld graph data using matrix profiling to identify anomalies within the weld graph data.
